(19) Europäisches Patentamt
European Patent Office
Office européen des brevets

(11) **EP 4 138 328 A1**

(12) **EUROPEAN PATENT APPLICATION**
published in accordance with Art. 153(4) EPC

(43) Date of publication:
**22.02.2023 Bulletin 2023/08**

(21) Application number: **21803073.2**

(22) Date of filing: **11.05.2021**

(51) International Patent Classification (IPC):
**H04L 5/00** (2006.01)      **H04W 72/12** (2009.01)

(52) Cooperative Patent Classification (CPC):
**H04L 1/00; H04L 5/00; H04W 72/12**

(86) International application number:
**PCT/CN2021/093019**

(87) International publication number:
**WO 2021/228079 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020   CN 202010414536**

(71) Applicant: **Vivo Mobile Communication Co., Ltd.
Dongguan, Guangdong 523863 (CN)**

(72) Inventors:
• **LIU, Siqi
Dongguan, Guangdong 523863 (CN)**
• **JI, Zichao
Dongguan, Guangdong 523863 (CN)**

(74) Representative: **Winter, Brandl - Partnerschaft mbB
Alois-Steinecker-Straße 22
85354 Freising (DE)**

(54) **INFORMATION INDICATION METHOD AND APPARATUS, INFORMATION DETERMINATION METHOD AND APPARATUS, AND COMMUNICATION DEVICE**

(57)    This application discloses an information indication method and apparatus, an information determining method and apparatus, and a communication device, and belongs to the field of communication technologies. The information indication method includes: obtaining control signaling; and determining related information of sidelink SL feedback information based on the control signaling, where the control signaling includes at least one of a first parameter field and a DAI field, the first parameter field is used to indicate related information of SL feedback information, the DAI field is used to indicate related information of SL feedback information or related information of Uu feedback information, and the control signaling is UL DCI or higher layer signaling.

FIG. 1

EP 4 138 328 A1

**Description**

**CROSS-REFERENCE TO RELATED APPLICATIONS**

This application claims priority to Chinese Patent Application No. 202010414536.3, filed in China on May 15, 2020, which is incorporated herein by reference in its entirety.

**TECHNICAL FIELD**

This application belongs to the field of communication technologies, and specifically, relates to an information indication method and apparatus, an information determining method and apparatus, and a communication device.

**BACKGROUND**

To improve data transmission reliability and resource utilization over sidelink (sidelink, SL), currently, feedback mechanism, for example, hybrid automatic repeat request (Hybrid Automatic Repeat reQuest, HARQ) feedback, is also introduced into the SL technology. After receiving SL data, an SL receiving user may indicate, by feeding back SL HARQ-ACK information to a network device on a corresponding channel, whether transmission of the SL data has succeeded or failed. However, currently, there is no applicable method to ensure consistent understanding of a terminal and a network device on SL feedback information, which affects reliability of the SL feedback information.

**SUMMARY**

Embodiments of this application are intended to provide an information indication method and apparatus, an information determining method and apparatus, and a communication device, so as to resolve a problem of how to ensure consistent understanding of a terminal and a network device on SL feedback information.

To resolve the foregoing technical problem, this application is implemented as follows.

According to a first aspect, an embodiment of this application provides an information indication method, applied to a terminal and including:

obtaining control signaling, where the control signaling is uplink-related downlink control information UL DCI or higher layer signaling; and
determining related information of sidelink SL feedback information based on the control signaling, where
the control signaling includes at least one of a first parameter field and a DAI field, the first parameter field is used to indicate related information of SL feedback information, and the DAI field is used to indicate related information of SL feedback information or related information of Uu feedback information.

According to a second aspect, an embodiment of this application provides an information indication method, applied to a network device and including:

sending control signaling to a terminal, where
the control signaling is used to indicate related information of SL feedback information;
the control signaling includes at least one of a first parameter field and a DAI field, the first parameter field is used to indicate related information of SL feedback information, and the DAI field is used to indicate related information of SL feedback information or related information of Uu feedback information; and
the control signaling is UL DCI or higher layer signaling.

According to a third aspect, an embodiment of this application provides an information determining method, applied to a terminal and including:

obtaining a dynamic time offset and a semi-static time offset that are used for determining a time domain resource in which SL feedback information is carried; and
determining any one of the following: the semi-static time offset includes the dynamic time offset, or the dynamic time offset includes the semi-static time offset.

According to a fourth aspect, an embodiment of this application provides an information configuration method, applied to a network device and including:

sending configuration information to a terminal, where
the configuration information indicates a dynamic time offset and a semi-static time offset that are used for determining a time domain resource in which SL feedback information is carried; and the semi-static time offset includes the dynamic time offset, or the dynamic time offset includes the semi-static time offset.

According to a fifth aspect, an embodiment of this application provides an information determining method, applied to a communication device and including:

when a time domain position of an associated resource corresponding to a first time offset belongs to P resource pools, determining, based on a weighted sum of time domain periods of a first resource, the number of bits of SL feedback information corresponding to the time domain position, where
P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

According to a sixth aspect, an embodiment of this application provides an information indication apparatus, applied to a terminal and including:

a first obtaining module, configured to obtain control signaling, where the control signaling is UL DCI or higher layer signaling; and
a first determining module, configured to determine related information of SL feedback information based on the control signaling, where
the control signaling includes at least one of a first parameter field and a DAI field, the first parameter field is used to indicate related information of SL feedback information, and the DAI field is used to indicate related information of SL feedback information or related information of Uu feedback information.

According to a seventh aspect, an embodiment of this application provides an information indication apparatus, applied to a network device and including:

a first sending module, configured to send control signaling to a terminal, where
the control signaling is used to indicate related information of SL feedback information;
the control signaling includes at least one of a first parameter field and a DAI field, the first parameter field is used to indicate related information of SL feedback information, and the DAI field is used to indicate related information of SL feedback information or related information of Uu feedback information; and
the control signaling is UL DCI or higher layer signaling.

According to an eighth aspect, an embodiment of this application provides an information determining apparatus, applied to a terminal and including:

a second obtaining module, configured to obtain a dynamic time offset and a semi-static time offset that are used for determining a time domain resource in which SL feedback information is carried; and
a second determining module, configured to determine any one of the following: the semi-static time offset includes the dynamic time offset, or the dynamic time offset includes the semi-static time offset.

According to a ninth aspect, an embodiment of this application provides an information configuration apparatus, applied to a network device and including:
a second sending module, configured to send configuration information to a terminal, where the configuration information indicates a dynamic time offset and a semi-static time offset that are used for determining a time domain resource in which SL feedback information is carried; and the semi-static time offset includes the dynamic time offset, or the dynamic time offset includes the semi-static time offset.
According to a tenth aspect, an embodiment of this application provides an information determining apparatus, applied to a communication device and including:

a second determining module, configured to: when a time domain position of an associated resource corresponding to a first time offset belongs to P resource pools, determine, based on a weighted sum of time domain periods of a first resource, the number of bits of SL feedback information corresponding to the time domain position, where
P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

According to an eleventh aspect, an embodiment of this application provides a communication device, including a processor, a memory, and a program or instructions stored in the memory and capable of running on the processor, where when the program or instructions are executed by the processor, the steps of the foregoing methods may be implemented.

According to a twelfth aspect, an embodiment of this application provides a readable storage medium, where the readable storage medium stores a program or instructions, and when the program or instructions are executed by a processor, the steps of the foregoing methods may be implemented.

According to a thirteenth aspect, an embodiment of this application provides a chip, where the chip includes a processor and a communication interface, the communication interface is coupled to the processor, and the processor is configured to run a program or instructions to implement the foregoing methods.

In the embodiments of this application, a terminal may obtain control signaling and determine related information of SL feedback information based on the control signaling, where the control signaling includes at least one of a first parameter field and a DAI field. In this way, the related information of SL feedback information can help the terminal and a network device, for example, a base station, keep consistent understanding on the SL feedback information (for example, an SL codebook), thereby enhancing reliability of the SL feedback information.

**BRIEF DESCRIPTION OF DRAWINGS**

FIG. 1 is a flowchart of an information indication method according to an embodiment of this application;
FIG. 2 is a flowchart of another information indication method according to an embodiment of this application;
FIG. 3 is a flowchart of an information determining method according to an embodiment of this application;
FIG. 4 is a flowchart of another information determining method according to an embodiment of this application;
FIG. 5 is a flowchart of another information determining method according to an embodiment of this application;
FIG. 6 is a schematic structural diagram of an information indication apparatus according to an embodiment of this application;
FIG. 7 is a schematic structural diagram of another information indication apparatus according to an embodiment of this application;
FIG. 8 is a schematic structural diagram of an information determining apparatus according to an embodiment of this application;
FIG. 9 is a schematic structural diagram of another information determining apparatus according to an embodiment of this application;
FIG. 10 is a schematic structural diagram of another information determining apparatus according to an embodiment of this application;
FIG. 11 is a schematic structural diagram of a terminal according to an embodiment of this application; and
FIG. 12 is a schematic structural diagram of a network device according to an embodiment of this application.

**DESCRIPTION OF EMBODIMENTS**

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, in the specification and claims, "and/or" represents at least one of connected objects, and the character "/" generally represents an "or" relationship between the associated objects.

For ease of understanding, some content included in the embodiments of this application is first described as follows.

In the embodiments of this application, a downlink control information (Downlink Control Information, DCI) format (format) number for uplink scheduling may be x-0, for example, including 0-0 and 1-0.

Optionally, a DCI format number for downlink scheduling may be 1-X, the DCI format number for uplink scheduling may be 0-X, and a DCI format number for SL scheduling may be 3-X.

In the embodiments of this application, sidelink user equipment may be transmitting user equipment or receiving user equipment, that is, the same user equipment may perform transmitting or receiving separately at different times or in different frequencies. Sidelink data packets may be transmitted over sidelink between user equipments. Therefore, a control node (for example, a base station) may not be able to directly know whether the transmission of the sidelink data packets has succeeded or not, and user equipment needs to send sidelink HARQ-ACK information (for example, sidelink ACK/NACK) to the control node, so that the control node can further determine whether the transmission over sidelink has succeeded. In a scheduled resource allocation (Scheduled resource allocation) mode (generally referred to as mode-1), the user equipment may report SL HARQ information to the control node through a physical uplink control channel (Physical Uplink Control Channel, PUCCH) or a physical uplink shared channel (Physical Uplink Shared Channel, PUSCH).

The SL HARQ information may be reported in a codebook format. One uplink resource used for reporting the SL HARQ information may be associated with one or more physical sidelink feedback channel (Physical Sidelink Feedback Channel, PSFCH) resources. Apriority of a PSFCH is related to a priority of other corresponding SL transmission (a physical sidelink control channel (Physical Sidelink Control Channel, PSCCH) and/or a physical sidelink shared channel (Physical Sidelink Shared Channel, PSSCH)). However, in some special cases in which a receiving device does not perform HARQ feedback or a transmitting device does not detect a PSFCH, there is still SL HARQ information.

Manners of determining a HARQ-ACK codebook (codebook) include two types: a semi-static determining manner (for example, determining a type1 codebook) and a dynamic determining manner (for example, determining a type2 codebook). When the semi-static determining manner is used, the HARQ-ACK codebook is a semi-static codebook, and a size of the codebook, that is, the number of bits included in the codebook, is fixed. When the dynamic determining manner is used, the HARQ-ACK codebook is a dynamic codebook, and a size of the codebook, that is, the number of bits included in the codebook, may dynamically change.

Optionally, a secondary link, a direct communication link, a sidelink, and an SL in this application are interchangeable.

Optionally, in this application, UL DCI may be DCI for scheduling an uplink resource, DCI for activating an uplink resource, or DCI for deactivating an uplink resource; DL DCI may be DCI for scheduling a downlink resource, DCI for activating a downlink resource, or DCI for deactivating a downlink resource; and SL DCI may be DCI for scheduling an SL resource, DCI for activating an SL resource, or DCI for deactivating an SL resource.

Optionally, the SL DCI may be at least one of a DCI format 3-0 and a DCI format 3-1, or a DCI format scrambled by an SL-RNTI or an SL-CS-RNTI.

Optionally, the LTL DCI may be at least one of a DCI format 0-0, a DCI format 0-1, a DCI format 0-2, or another DCI format for UL scheduling.

Optionally, in this application, related uplink control information (Uplink Control Information, UCI) used for Uu transmission, for example, at least one of HARQ information, control state information (Channel State Information, CSI), scheduling request (Scheduling Request, SR) information, or the like, may be referred to as Uu feedback information or Uu report information.

Optionally, in this application, related SL feedback or control information used for SL transmission, for example, at least one of SL HARQ information, SL CSI, or the like, may be referred to as SL feedback information or SL report information.

It should be noted that the UL DCI format 0-1 may be used as an example for description in this application, but UL DCI applicable to this application may be alternatively in another UL DCI format, for example, the UL DCI format 0-0 or the UL DCI format 0-2.

This application is described in detail below with reference to the embodiments and the accompanying drawings.

First Embodiment

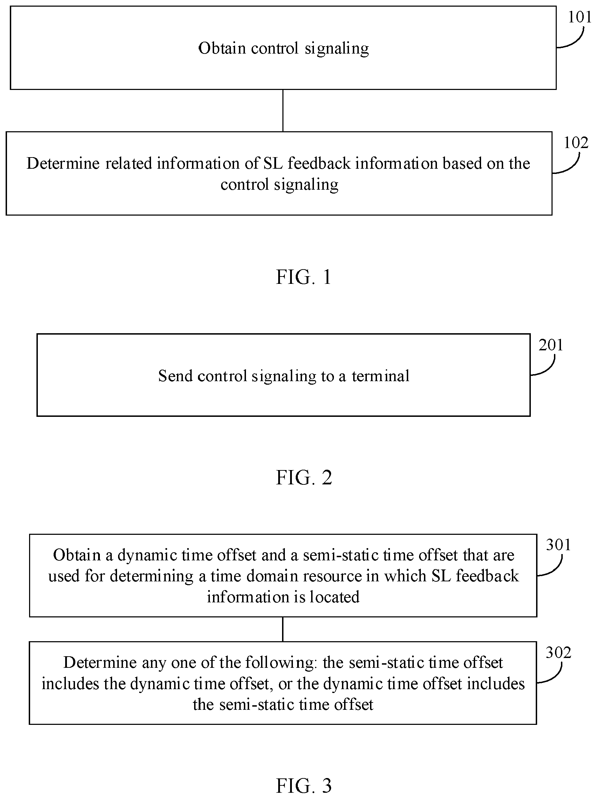

FIG. 1 is a flowchart of an information indication method according to an embodiment of this application. The method is applied to a terminal. As shown in FIG. 1, the method includes the following steps.

Step 101: Obtain control signaling.

In this embodiment, the control signaling may be UL DCI or higher layer signaling. It should be noted that the LTL DCI may be sent by a network device, for example, a base station, to the terminal. The UL DCI may be received by the terminal from the base station. The higher layer signaling may be obtained in any one of the following manners: being configured by the base station, being preconfigured, being predefined in a protocol, being indicated by another terminal, and the like. For example, the higher layer signaling may be obtained in the preconfiguration manner.

Step 102: Determine related information of SL feedback information based on the control signaling.

Optionally, the control signaling is used to indicate related information of SL feedback information. The control signaling may include at least one of a first parameter field and a downlink assignment index (Downlink Assignment Index, DAI) field. The first parameter field is used to indicate related information of SL feedback information. The DAI field is used to indicate related information of SL feedback information or related information of Uu feedback information.

For example, in some cases, a DAI field in the LTL DCI may be reused to indicate related information of SL feedback information, so as to reduce signaling overheads. For example, at some moments (for example, when an uplink resource scheduled by the UL DCI collides with a resource of the SL feedback information), the DAI field in the UL DCI indicates related information of SL feedback information; or at some other moments (for example, when an uplink resource scheduled by the UL DCI collides with a resource of the Uu feedback information), the DAI field in the UL DCI indicates count information of the related information of the Uu feedback information. The conflict may be understood as follows: at least partially overlapping in time domain and/or frequency domain; or being located within a same time domain range and/or being located within a same frequency domain range, for example, being located in a same slot (slot).

The first parameter field indicates an SL parameter field, which may also be referred to as a Sidelink Assignment Index (SAI) field. For another example, in some cases, a parameter field (for example, the first parameter field) used for SL may be introduced into the UL DCI or the higher layer signaling, and the related information of SL feedback information may be indicated by the parameter field, so that two communication parties easily learn the related information of the SL feedback information, and the two communication parties keep consistent understanding on the SL feedback information (for example, SL codebook).

For another example, in some cases, the DAI field and the first parameter field may be used in combination to indicate related information of SL feedback information. For example, the DAI field is used to indicate a grant for SL feedback information, and the first parameter field is used to indicate count information of SL DCI.

In an implementation, the higher layer signaling may include at least one of the following: radio link control (Radio Link Control, RRC) signaling, a system information block (System Information Block, SIB), medium access control (Medium Access Control, MAC) layer signaling, radio link control (Radio Link Control, RLC) layer signaling, packet data convergence protocol (Packet Data Convergence Protocol, PDCP) layer signaling, and service data adaptation protocol (Service Data Adaptation Protocol, SDAP) layer signaling.

In the information indication method in this embodiment of this application, the terminal may obtain the control signaling, where the control signaling includes at least one of the first parameter field and the DAI field, and the control signaling is used to indicate related information of SL feedback information. In this way, the related information of SL feedback information can help the terminal and the network device, for example, the base station, keep consistent understanding on the SL feedback information (for example, the SL codebook), thereby enhancing reliability of the SL feedback information.

Optionally, the related information of SL feedback information may include at least one of the following:

the grant for the SL feedback information, for example, whether the terminal is allowed to transmit the SL feedback information in a PUSCH scheduled by the UL DCI; and
the count information of the SL DCI (which may be represented as, for example, a sidelink assignment index (Sidelink Assignment Index, SAI)), where the count information may include at least one of a counter sidelink assignment index (counter Sidelink Assignment Index, cSAI) of the SL DCI and a total sidelink assignment index (total Sidelink Assignment Index, tSAI) of the SL DCI. It can be understood that the cSAI indicates an SL DCI number, and the tSAI indicates a total number of pieces of SL DCI. In this way, with the cSAI and the tSAI, the terminal can conveniently determine whether the SL DCI is lost, and then feed back expected SL feedback information to the base station.

Optionally, the related information of the Uu feedback information may include at least one of the following:

a grant for the Uu feedback information; and
count information of DL DCI (which may be represented as, for example, a downlink assignment index (Downlink Assignment Index, DAI)), where the count information may include at least one of a counter downlink assignment index (counter Downlink Assignment Index, cDAI) of the DL DCI and a total downlink assignment index (total Downlink Assignment Index, tDAI) of the DL DCI. It can be understood that the cDAI indicates a DL DCI number, and the tDAI indicates a total number of pieces of DL DCI.

In this embodiment of this application, in a case that the DAI field in the UL DCI is reused to indicate related information of SL feedback information, the case of the DAI field indicating related information of SL feedback information may include at least one of the following cases.

(a) If the UL DCI includes a first DAI field (or referred to as including a 1 st DAI field or including a 1-bit or 2-bit DAI), the first DAI field (or referred to as including a 1st DAI field or including a 1-bit or 2-bit DAI) indicates the grant for the SL feedback information.

For example, if the bit is 0, the SL feedback information can be transmitted in a PUSCH scheduled by the UL DCI; or if the bit is 1, the SL feedback information cannot be transmitted in a PUSCH scheduled by the UL DCI. Alternatively, if the bit is 1, the SL feedback information can be transmitted in a PUSCH scheduled by the UL DCI; or if the bit is 0, the SL feedback information cannot be transmitted in a PUSCH scheduled by the UL DCI.

For another example, if the 2 bits are 11 or a value corresponding to the 2 bits is 4, the SL feedback information can be transmitted in a PUSCH scheduled by the UL DCI; otherwise, the SL feedback information cannot be transmitted in a PUSCH scheduled by the UL DCI. Alternatively, if the 2 bits are 11 or a value corresponding to the 2 bits is 4, the SL feedback information cannot be transmitted in a PUSCH scheduled by the UL DCI; otherwise, the SL feedback information can be transmitted in a PUSCH scheduled by the UL DCI.

(b) If the LTL DCI includes a first DAI field (or referred to as including a 1 st DAI field or including a 1-bit DAI), the first DAI field (or referred to as including a 1st DAI field or including a 1-bit DAI) indicates the count information SAI of the SL DCI.

For example, the count information SAI is specifically a cSAI or a tSAI of the SL DCI.

(c) If the UL DCI includes a first DAI field (or referred to as including a 1 st DAI field or including a 2-bit DAI), the first DAI field (or referred to as including a 1st DAI field or including a 2-bit DAI) indicates the count information SAI of the SL DCI.

For example, the count information SAI is specifically a cSAI or a tSAI of the SL DCI.

Optionally, in some cases, the UL DCI includes only a 1st DAI field (that is, including a 2-bit DAI or including a 2-bit SAI). The some cases are that an uplink resource scheduled by the UL DCI collides with a resource of the SL feedback information, or the UL DCI and/or a higher layer configuration indicates that the DAI field in the LTL DCI indicates related information of SL feedback information.

(d) If the UL DCI includes a first DAI field and a second DAI field (or referred to as including a 4-bit DAI), the first DAI field (that is, a DAI of the first 2 bits) indicates a cSAI, and the second DAI field (that is, a DAI of the last 2 bits) indicates a tSAI; or the first DAI field (that is, a DAI of the first 2 bits) indicates a tSAI, and the second DAI field (that is, a DAI of the last 2 bits) indicates a cSAI.

(e) If the LTL DCI includes a first DAI field and a second DAI field (or referred to as including a 4-bit DAI), the first DAI field (that is, a DAI of the first 2 bits) indicates a cSAI or a tSAI, and the second DAI field is ignored, or the second DAI field (that is, a DAI of the last 2 bits) indicates a preset value; or the second DAI field (that is, a DAI of the last 2 bits) indicates a cSAI or a tSAI, and the first DAI field is ignored, or the first DAI field (that is, a DAI of the first 2 bits) indicates a preset value. Optionally, the preset value may be any one of the following: a value with all 1s, a value with all 0s, an invalid value, a redundancy value, or the like. For example, the 2 bits are '11', or a value corresponding to the 2 bits is 4.

Optionally, the determining the related information of SL feedback information based on the DAI field in the UL DCI may include at least one of the following:

determining the grant for the SL feedback information based on the first DAI field in the UL DCI;
determining the count information of the SL DCI based on the first DAI field in the UL DCI;
determining the cSAI and the tSAI based on the first DAI field and the second DAI field in the UL DCI, where for example, the first DAI field indicates the cSAI, and the second DAI field indicates the tSAI; or the first DAI field indicates the tSAI, and the second DAI field indicates the cSAI; and
determining the cSAI or the tSAI based on the first DAI field or the second DAI field in the UL DCI, where for example, the first DAI field indicates the cSAI or the tSAI, and the second DAI field is ignored, or the second DAI field indicates the preset value; or the second DAI field indicates the cSAI or the tSAI, and the first DAI field is ignored, or the first DAI field indicates the preset value, where the preset value is any one of the following: a value with all 1s, a value with all 0s, an invalid value, or a redundancy value.

Optionally, in a case that the first parameter field (for example, the SAI field) in the UL DCI is used to indicate related information of SL feedback information, the case of the first parameter field indicating related information of SL feedback information may include at least one of the following cases.

(1) The UL DCI carries a 1-bit or 2-bit permission (which may also be referred to as a SAI) of the SL feedback information.

For example, if the 1 bit is 0, the SL feedback information can be transmitted in a PUSCH scheduled by the UL DCI; or if the 1 bit is 1, the SL feedback information cannot be transmitted in a PUSCH scheduled by the UL DCI.

Alternatively, if the 1 bit is 1, the SL feedback information can be transmitted in a PUSCH scheduled by the UL DCI; or if the 1 bit is 0, the SL feedback information cannot be transmitted in a PUSCH scheduled by the UL DCI.

For another example, if the 2 bits are 11 or a value corresponding to the 2 bits is 4, the SL feedback information can be transmitted in a PUSCH scheduled by the UL DCI; otherwise, the SL feedback information cannot be transmitted in a PUSCH scheduled by the UL DCI. Alternatively, if the 2 bits are 11 or a value corresponding to the 2 bits is 4, the SL feedback information cannot be transmitted in a PUSCH scheduled by the UL DCI; otherwise, the SL feedback information can be transmitted in a PUSCH scheduled by the UL DCI.

(2) The UL DCI carries a 1-bit SAI for indicating the grant for the SL feedback information.

For example, if the 1-bit SAI is 0, the SL feedback information can be transmitted in a PUSCH scheduled by the UL DCI; or if the 1-bit SAI is 1, the SL feedback information cannot be transmitted in a PUSCH scheduled by the UL DCI. Alternatively, if the 1-bit SAI is 1, the SL feedback information can be transmitted in a PUSCH scheduled by the LTL DCI; or if the 1-bit SAI is 0, the SL feedback information cannot be transmitted in a PUSCH scheduled by the UL DCI.

(3) The UL DCI carries a 2-bit SAI, which is a counter: e.g., cSAI or a total: e.g., tSAI of the SL DCI, specifically, for example, a last SL DCI number until a current moment or a previous moment, or specifically, for example, a total number of pieces of SL DCI until a current moment or a previous moment.

(4) The UL DCI carries a 2-bit cSAI and a 2-bit tSAI, which are an SL DCI number and a total number of pieces of SL DCI respectively, specifically, for example, a last SL DCI number until a current moment or a previous moment, or specifically, for example, a total number of pieces of SL DCI until a current moment or a previous moment.

In an implementation, an existing DAI field in the LTL DCI may be used to indicate a SAI. In the case of a semi-static codebook, the DAI field may be used to indicate a 1-bit SAI. In the case of a dynamic codebook, the DAI field may be used to indicate a 2-bit SAI.

In another implementation, an existing DAI field in the UL DCI may be used to indicate a SAI. In the case of a semi-static codebook, the first DAI field may include a 1-bit or 2-bit SAI. In the case of a dynamic codebook, the first DAI field may include a 2-bit SAI. In addition, in the case of a dynamic codebook and two sub-codebooks, the second DAI field does not indicate a SAI.

In another implementation, the UL DCI includes a DAI field and a SAI field. For the SAI field, 1 bit is included in the case of a semi-static codebook and when at least one of the following is met: an SL CG type1 is configured, an SL CG type2 is configured, an SL CG type2 is activated, and monitoring SL DCI is configured. Preferably, the SAI field includes 1 bit in the case of a semi-static codebook and when an SL CG (type1 and/or type2) is configured and/or monitoring SL DCI is configured. However, the SAI field includes 2 bits in the case of a dynamic codebook and when at least one of the following is met: an SL CG type1 is configured, an SL CG type2 is configured, an SL CG type2 is activated, and monitoring SL DCI is configured. Preferably, the SAI field includes 2 bits in the case of a dynamic codebook and when an SL CG (type1 and/or type2) is configured and/or monitoring SL DCI is configured.

In another implementation, a DAI is used to indicate a SAI in some cases, and the UL DCI includes a dedicated SAI field in some other cases. For example, in the case of a semi-static codebook, the first DAI field may be used to indicate a 1-bit SAI; or in the case of a dynamic codebook, the DCI includes a 2-bit SAI in addition to the DAI.

It should be noted that, optionally, when the SL feedback information meets the following first case, the SL feedback information can be transmitted in the PUSCH. Further, optionally, even if the permission or the SAI field of the SL feedback information indicates a value (for example, 0, or for example, 11 or a value 4) corresponding to that the SL feedback information cannot be transmitted in the PUSCH scheduled by the LTL DCI in the foregoing descriptions, the SL feedback information can still be transmitted in the PUSCH.

Alternatively, optionally, when the SL feedback information meets the following first case, the SL feedback information cannot be transmitted in the PUSCH. Further, optionally, even if the permission or the SAI field of the SL feedback information indicates a value (for example, 1, 2, or 3) corresponding to that the SL feedback information can be transmitted in the PUSCH scheduled by the UL DCI in the foregoing descriptions, the SL feedback information can still be transmitted in the PUSCH.

The first case may include at least one of the following cases.

(a) There is only a NACK in the SL feedback information.

For example, the SL feedback information has N1 bits and is an N1-bit NACK.

(b) The SL feedback information is a NACK, and the NACK corresponds to a unicast or multicast feedback mechanism option2.

(c) The SL feedback information is a NACK, and the NACK corresponds to a multicast feedback mechanism option1.

(d) There is only an ACK in the SL feedback information.

(e) The SL feedback information is SL HARQ information corresponding to a PSSCH and/or a PSCCH abandoned or canceled by a user, for example, a PSSCH abandoned or canceled by the user through priority comparison and/or SL HARQ information corresponding to a PSCCH in a case that the user simultaneously has a plurality of transmissions.

(f) The SL feedback information is SL HARQ information corresponding to a PSFCH abandoned or canceled by a user, for example, SL HARQ information corresponding to a PSFCH abandoned or canceled by the user through priority comparison in a case that the user simultaneously has a plurality of transmissions.

(g) The SL feedback information is SL HARQ information corresponding to an SL CG that is not actually used.

For example, in a case that none of resources in one period of an SL CG is actually used for transmission, corresponding SL feedback information is an ACK.

(h) The SL feedback information is SL HARQ information corresponding to first transmission, where the first transmission may include at least one of blind transmission (blind transmission), blind retransmission (blind retransmission), transmission after HARQ feedback is disabled, broadcast transmission, transmission that does not support HARQ feedback, transmission in a resource pool not configured with a PSFCH, and the like.

(i) The SL feedback information is SL HARQ information corresponding to second transmission, where the second transmission may include transmission in the case of at least one of a multicast feedback mechanism option1, a multicast feedback mechanism option2, unicast, and the like, and the SL HARQ information is corresponding SL HARQ information in a case that at least one of PSFCHs corresponding to the transmission is not detected.

(j) The SL feedback information is SL HARQ information corresponding to a case that a maximum number of transmissions or a maximum number of retransmissions is met.

I. Optionally, dynamic scheduling which is met the maximum number of transmissions or the maximum number of retransmissions, for example, the maximum number of transmissions or the maximum number of retransmissions that is related to DCI.

II. Optionally, the maximum number of transmissions or the maximum number of retransmissions that is met is semi-static scheduling, for example, the maximum number of transmissions or the maximum number of retransmissions that is related to an SL CG.

III. The meeting the maximum number of transmissions or the maximum number of retransmissions Nmax includes two cases:

(1) A TB is actually transmitted for Nmax times.
(2) The Nmax-th candidate resource is used for transmitting the TB, but the actual number of transmissions may be less than Nmax, that is, it is possible that only some of preceding Nmax - 1 candidate resources are used for transmitting the TB.

For example, Nmax = 2, there are three resources in one CG, and a user starts to perform transmission from the third resource. Although transmission is performed only once, Nmax is still reached.

(k) The SL feedback information is SL CSI or at least includes SL CSI (for example, including SL CSI and SL HARQ information).

I. Transmission of the Uu feedback information is abandoned/canceled/skipped, and/or the SL feedback information and the Uu report information are transmitted.

II. Alternatively, priorities of the SL feedback information and the Uu report information are compared to determine which one is to be transmitted.

The multicast feedback mechanism option1 (NACK-only feedback) is as follows: ANACK is fed back if data is received but cannot be decoded, and no feedback is performed in other cases. In this case, if a receiver does not receive a NACK, it is considered that all receive ends have successfully received and decoded data. However, a disadvantage of this mechanism lies in that a sender may confuse two cases: Data is successfully received, and the receiver fails to receive SCI. That is, although the receiver fails to receive SCI and data, the sender considers that the receiver has successfully received the SCI and data. This manner is applicable to a connectionless multicast scenario.

The multicast feedback mechanism option2 (ACK/NACK feedback) is as follows: A NACK is fed back if data is received but cannot be decoded or if SCI is received but no data is received. An ACK is fed back if data is received and correctly decoded.

In this embodiment of this application, the control signaling may further include type indication information, where the type indication information is used to indicate whether the control signaling indicates the related information of SL feedback information or indicates related information of Uu feedback information.

For example, type indication information in the higher layer signaling indicates that the LTL DCI indicates related information of SL feedback information, and further, type indication information in the UL DCI indicates that the DAI field in the LTL DCI indicates related information of SL feedback information.

For example, if the type indication information in the UL DCI or the higher layer signaling is 1 bit whose value is 0 or 1, 0 may indicate that the DAI field in the UL DCI indicates related information of SL feedback information, and 1 may indicate that the DAI field in the UL DCI indicates the related information (for example, the count information) of the Uu feedback information; or 0 may indicate that the DAI field in the LTL DCI indicates the related information (for example, the count information) of the Uu feedback information, and 1 may indicate that the DAI field in the UL DCI indicates related information of SL feedback information.

For another example, if the type indication information is present in the UL DCI or the higher layer signaling, the DAI field in the UL DCI indicates related information of SL feedback information; or if the type indication information is not present in the UL DCI or the higher layer signaling, the DAI field in the UL DCI indicates the related information (for example, the count information) of the Uu feedback information. Alternatively, if the type indication information is not present in the UL DCI or the higher layer signaling, the DAI field in the UL DCI indicates related information of SL feedback information; or if the type indication information is present in the UL DCI or the higher layer signaling, the DAI field in the UL DCI indicates the related information (for example, the count information) of the Uu feedback information.

In this embodiment of this application, in a case that at least one of the following conditions is met, the control signaling (for example, the first parameter field and/or the DAI field) may indicate the count information SAI, of the SL DCI, that has a first preset number of bits (for example, 1 bit), or the grant for the SL feedback information:

(1) At least one grant-free SL semi-static scheduling configuration is configured for the terminal. For example, at least one SL configured grant type1 is configured.

(2) At least one grant-based SL semi-static scheduling configuration is configured for the terminal. For example, at least one SL configured grant type2 is configured.

(3) At least one grant-based SL semi-static scheduling configuration is activated for the terminal. For example, at least one SL configured grant type2 is activated.

(4) The terminal needs to monitor or receive SL DCI, for example, a DCI format 3_0.

(5) SL feedback information of the terminal is of a semi-static type or a type1. For example, pdsch-HARQ-ACK-Codebook = semi-static.

For example, an SL CG (type1 and/or type2) is configured for the terminal, and/or monitoring SL DCI is configured for the terminal, and the type of the SL feedback information is semi-static.

Optionally, in a case that at least one of the following conditions is met, the control signaling (for example, the first parameter field and/or the DAI field) may indicate the count information SAI, of the SL DCI, that has a second preset number of bits (for example, 2 or 4 bits):

(6) At least one grant-free SL semi-static scheduling configuration is configured for the terminal. For example, at least one SL configured grant type1 is configured.

(7) At least one grant-based SL semi-static scheduling configuration is configured for the terminal. For example, at least one SL configured grant type2 is configured.

(8) At least one grant-based SL semi-static scheduling configuration is activated for the terminal. For example, at least one SL configured grant type2 is activated.

(9) The terminal needs to monitor or receive SL DCI, for example, a DCI format 3_0.

(10) A type of SL feedback information of the terminal is dynamic or a type2. For example, pdsch-HARQ-ACK-Codebook = dynamic.

For example, an SL CG (type1 and/or type2) is configured for the terminal, and/or monitoring SL DCI is configured for the terminal, and the type of the SL feedback information is dynamic.

It should be noted that the foregoing conditions (1) to (10) are conditions used for the terminal. In a case that these conditions are not met, the control signaling may carry 0-bit related information of the SL feedback information.

Optionally, if the UL DCI does not carry the related information of the SL feedback information, in a case that an uplink resource scheduled by the UL DCI collides with a resource of the SL feedback information, the uplink resource scheduled by the UL DCI may be used for transmission of the SL feedback information. For example, the uplink resource is used for the transmission of the SL feedback information by default. The conflict may be explained as follows: (1) at least partially overlapping in time domain and/or frequency domain; or (2) being located within a same time domain range and/or being located within a same frequency domain range.

Optionally, in this embodiment, a value of the SAI in the related information of SL feedback information may include at least one of the following:

(a) an SL DCI number, for example, a cSAI, indicated by the UL DCI, which is a number indicated by previous SL DCI;

(b) a total number, for example, a tSAI, indicated by the UL DCI, of pieces of SL DCI, which is a total number indicated by previous SL DCI;

(c) an SL DCI number, for example, a cSAI, indicated by the UL DCI, which is a number indicated by the SL DCI; and

(d) a total number, for example, a tSAI, indicated by the UL DCI, of pieces of SL DCI, which is a total number indicated by the SL DCI.

Optionally, in this embodiment, in a case that a type of a codebook configured by a control node or preconfigured is a semi-static codebook or a type1 codebook (for example, pdsch-HARQ-ACK-Codebook = semi-static), the UL DCI may include a 1-bit grant for the SL feedback information and/or a 1-bit SAI.

After the terminal determines the SL feedback information based on the foregoing method, further, optionally, the terminal may transmit the SL feedback information. The SL feedback information is sent to the control node. The control node may be a base station, an integrated access backhaul (Integrated Access Backhaul, IAB) node, or another device in SL, for example, SL user equipment or a road side unit RSU (road side unit).

FIG. 2 is a flowchart of an information indication method according to an embodiment of this application. The method is applied to a network device. As shown in FIG. 2, the method includes the following steps.

Step 201: Send control signaling to a terminal.

In this embodiment, the control signaling is UL DCI or higher layer signaling. The control signaling includes at least one of a first parameter field and a DAI field, and the control signaling is used to indicate related information of SL feedback information. The first parameter field is used to indicate related information of SL feedback information, and the DAI field is used to indicate related information of SL feedback information or related information of Uu feedback information.

In the information indication method in this embodiment, the control signaling is sent to the terminal, where the control signaling is used to indicate related information of SL feedback information, and the related information of SL feedback information can help the terminal and the network device, for example, a base station, keep consistent understanding on the SL feedback information (for example, an SL codebook), thereby enhancing reliability of the SL feedback information.

Optionally, the higher layer signaling may include at least one of the following: RRC signaling, SIB, MAC layer signaling, RLC layer signaling, PDCP layer signaling, and SDAP layer signaling.

Optionally, the related information of SL feedback information may include at least one of the following:

a grant for SL feedback information; and
count information of SL downlink control information SL DCI, where the count information includes at least one of a counter sidelink assignment index cSAI of the SL DCI and a total sidelink assignment index tSAI of the SL DCI.

Optionally, the case of the DAI field indicating related information of SL feedback information includes at least one of the following:

if the UL DCI includes a first DAI field, the first DAI field indicates the grant for the SL feedback information;
if the UL DCI includes a first DAI field, the first DAI field indicates the count information of the SL DCI;
if the UL DCI includes a first DAI field and a second DAI field, the first DAI field indicates a cSAI, and the second DAI field indicates a tSAI; or the first DAI field indicates a tSAI, and the second DAI field indicates a cSAI; and
if the UL DCI includes a first DAI field and a second DAI field, the first DAI field indicates a cSAI or a tSAI, and the second DAI field is ignored, or the second DAI field indicates a preset value; or the second DAI field indicates a cSAI or a tSAI, and the first DAI field is ignored, or the first DAI field indicates a preset value, where the preset value is any one of the following: a value with all 1s, a value with all 0s, an invalid value, or a redundancy value.

Optionally, the control signaling may further include type indication information, where the type indication information is used to indicate that the control signaling indicates related information of SL feedback information, or the type indication information is used to indicate that the control signaling indicates related information of Uu feedback information.

Optionally, in a case that at least one of the following conditions is met, the control signaling (for example, the first parameter field and/or the DAI field) indicates the grant for the SL feedback information or the count information, of the SL DCI, that has a first preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;

the terminal needs to monitor or receive SL DCI; and

SL feedback information of the terminal is of a semi-static type.

Optionally, in a case that at least one of the following conditions is met, the control signaling (for example, the first parameter field and/or the DAI field) indicates the count information, of the SL DCI, that has a second preset number of bits:

at least one grant-free SL semi-static scheduling configuration is configured for the terminal;

at least one grant-based SL semi-static scheduling configuration is configured for the terminal;

at least one grant-based SL semi-static scheduling configuration is activated for the terminal;

the terminal needs to monitor or receive SL DCI; and

a type of SL feedback information of the terminal is dynamic.

It can be understood that the information indication method provided in this embodiment of this application is a network-side method corresponding to the method embodiment shown in FIG. 1. For specific explanations of related content, refer to the descriptions of the foregoing embodiment, and the same technical effects can be achieved. Details are not described herein again.

Second Embodiment

Currently, during implementation of SL feedback, a time offset of a time domain resource used for determining SL feedback information usually includes a dynamic time offset and a semi-static time offset. In addition, the two types of time offsets are usually configured, preconfigured, indicated, or defined in a protocol separately by using different signaling. For a time domain resource (for example, a PUCCH or a PUSCH) for SL feedback information, the number of bits or content of the SL feedback information is related to a time offset associated with the time domain resource. If the dynamic time offset is different from the semi-static time offset, SL feedback information associated only with the dynamic time offset, SL feedback information associated only with the semi-static time offset, and SL feedback information associated with the dynamic time offset and the semi-static time offset are different in terms of the number of bits and/or content, that is, the number of bits of the SL feedback information may change with time, which increases complexity of blind detection by the base station. In addition, consistent understanding on the number of bits of the SL feedback information cannot be maintained between the base station and a user, which reduces reliability. To resolve the problem that the number of bits of the SL feedback information may change and be inconsistent, this application proposes the following method.

FIG. 3 is a flowchart of an information determining method according to an embodiment of this application. The method is applied to a terminal. As shown in FIG. 3, the method includes the following steps.

Step 301: Obtain a dynamic time offset and a semi-static time offset that are used for determining a time domain resource in which SL feedback information is carried.

In this embodiment, that time offset (time offset) information, for example, time offset K1 information, used for determining the time domain resource in which the SL feedback information is carried includes the dynamic time offset (a dynamic time offset K1) and/or the semi-static time offset (a semi-static time offset K1) may be defined in a protocol, configured by a control node, preconfigured, or indicated by another terminal.

For the dynamic time offset K1 and/or the semi-static time offset K1:

I. For example, the dynamic time offset includes sl-FeedbackToLTL-ACK-DG and/or sl-FeedbackToLTL-ACK, where sl-FeedbackToLTL-ACK-DG and/or sl-FeedbackToUL-ACK are parameter names of time intervals between SL feedback (for example, a PSFCH) dynamically scheduled or activated in SL and a resource (for example, PUCCH or PUSCH) for SL feedback information.

II. For example, the semi-static time offset includes sl-ACKToLTL-ACK and/or sl-FeedbackToLTL-ACK-CG, where sl-ACKToLTL-ACK and/or sl-FeedbackToUL-ACK-CG are parameter names of time intervals between SL feedback (for example, PSFCH) semi-statically scheduled in SL and a resource (for example, PUCCH or PUSCH) for SL feedback information.

It can be understood that the dynamic time offset means that after the dynamic time offset is obtained (in this process, one or more time offsets may be defined in a protocol, configured by a control node, preconfigured, or indicated by another terminal), one or more of the dynamic time offset may (but not necessarily) be subsequently indicated by using first control signaling (for example, SL DCI, SCI, or a MAC CE).

For example, a possible time offset that is configured by a base station as indicated by SL DCI used for scheduling SL resources is a dynamic time offset, for example, sl-FeedbackToUL-ACK-DG.

For another example, a time offset indicated in DCI used to activate an SL CG type2 (sidelink configured grant type2, sidelink configured grant type2) is a time offset of the SL CG type2 activated by the DCI. For example, the DCI indicates a value of sl-FeedbackToUL-ACK-DG configured by the base station or a value index.

It can be understood that the semi-static time offset is a time offset corresponding to a semi-static resource configuration. The semi-static resource may be an SL CG (sidelink configured grant, sidelink configured grant) configured by the base station, or another SL semi-static resource, for example, a semi-static resource recommended, scheduled, notified, or indicated by one or more SL UEs to one or more other SL UEs, or for example, a preconfigured semi-static SL resource.

For example, a time offset in an SL CG configuration is the sl-FeedbackToLTL-ACK-CG.

Preferably, a sidelink configured grant type1 (SL CG type1, sidelink configured grant type1) configuration includes a time offset of the SL CG type2, for example, the sl-FeedbackToLTL-ACK-CG.

Optionally, a sidelink configured grant type2 (SL CG type2, sidelink configured grant type2) configuration includes a time offset of the SL CG type2, for example, sl-FeedbackToUL-ACK-CG.

In an implementation, a control node may configure one or more CGs (configured grant, configured grant), and each CG may have its own time offset. For example, the control node may configure one or more CGs type1 (grant-free CG), and each CG type1 has its own time offset. For example, the control node may configure one or more CGs type2 (grant-based CG), and DCI for activating a CG type2 has a time offset that includes at least one CG type2.

Step 302: Determine any one of the following: the semi-static time offset includes the dynamic time offset, or the dynamic time offset includes the semi-static time offset.

That the semi-static time offset includes the dynamic time offset may be referred to as that the dynamic time offset belongs to the semi-static time offset, which may be understood as that a value range of the dynamic time offset is within a value range of the semi-static time offset. For example, if three semi-static time offsets are configured: 1, 2, and 3 respectively, regardless of the number of dynamic time offsets, values of the dynamic time offsets should all be one or more values within {1, 2, 3}. For example, there are four dynamic time offsets, whose values are all 2; or there are two dynamic time offsets, whose values are 1; or there are three dynamic time offsets, whose values are 1, 2, and 3 respectively.

That the dynamic time offset includes the semi-static time offset may be referred to as that the semi-static time offset belongs to the dynamic time offset, which may be understood as that a value range of the semi-static time offset is within a value range of the dynamic time offset. For example, if three dynamic time offsets are configured: 1, 2, and 3 respectively, regardless of the number of semi-static time offsets, values of the semi-static time offsets should all be one or more values within {1, 2, 3}. For example, there are four semi-static time offsets, whose values are all 1; or there are two semi-static time offsets, whose values are 2; or there are three semi-static time offsets, whose values are 1, 2, and 3 respectively. Optionally, if the dynamic time offset includes a plurality of values, the semi-static time offset belongs to the dynamic time offset.

For example, if the sl-FeedbackToLTL-ACK-DG includes a plurality of values, the sl-FeedbackToLTL-ACK-CG belongs to the sl-FeedbackToLTL-ACK-DG. Assuming that sl-FeedbackToUL-ACK-DG = {1, 2, 3} and two SL CGs type1 are configured, which are SL CG type1#1 and SL CG type1#2, a semi-static sl-FeedbackToUL-ACK-CG corresponding to the two SL CGs type1 should be a value within {1, 2, 3}.

For example, if the sl-FeedbackToUL-ACK-DG includes one value, the sl-FeedbackToLTL-ACK-CG is equal to the sl-FeedbackToUL-ACK-DG. Assuming that sl-FeedbackToUL-ACK-DG = {1} and two SL CGs type1 are configured, which are SL CG type1#1 and SL CG type1#2, a semi-static sl-FeedbackToLTL-ACK-CG corresponding to the two SL CGs type1 should be 1.

Optionally, the semi-static time offset belongs to the dynamic time offset only when a preset condition 1 is met; otherwise (for example, when there is no dynamic scheduling, or no SL CG is configured, or no SL CG type1 is configured, or a type of the SL feedback information is a dynamic codebook or a type2 codebook), the semi-static time offset does not need to belong to the dynamic time offset. The preset condition 1 is that at least one of the following conditions is met.

(a) The terminal needs to monitor or receive SL DCI, for example, a DCI format 3_0.
(b) At least one grant-free SL semi-static scheduling configuration is configured for the terminal. For example, at least one SL configured grant type1 is configured.
(c) At least one grant-based SL semi-static scheduling configuration is configured for the terminal. For example, at least one SL configured grant type2 is configured.
(d) At least one grant-based SL semi-static scheduling configuration is activated for the terminal. For example, at least one SL configured grant type2 is activated.
(e) SL feedback information of the terminal is of a semi-static type or a type1.

For example, an SL CG (type1 and/or type2) is configured for the terminal, and/or monitoring SL DCI is configured for the terminal, and the type of the SL feedback information is semi-static. In this case, the semi-static time offset belongs to the dynamic time offset.

For another example, an SL CG type 1 is configured for the terminal, and the following is met: An SL CG type2 is configured for the terminal, and/or the terminal needs to monitor or receive a DCI format 3_0. In this case, a group of time offsets K_1 is provided for the terminal, and the group of K_1 includes K_1 corresponding to the semi-static time offset and K_1 corresponding to the dynamic time offset. In this case, the semi-static time offset belongs to the dynamic time offset, in other words, a value corresponding to the dynamic time offset should include a value corresponding to the semi-static time offset.

For example, when the type of the SL feedback information is a dynamic codebook or a type2 codebook, the requirement that the semi-static time offset belongs to the dynamic time offset does not need to be met. That is, the semi-static time offset and the dynamic time offset may be the same or different.

In the information determining method in this embodiment of this application, the semi-static time offset used for determining the time domain resource in which the SL feedback information is carried belongs to the dynamic time offset, so that a size of the SL feedback information can be kept at a constant value or within a relatively stable range (especially when the SL feedback information is semi-static), thereby reducing complexity of blind detection by the base station and improving reliability.

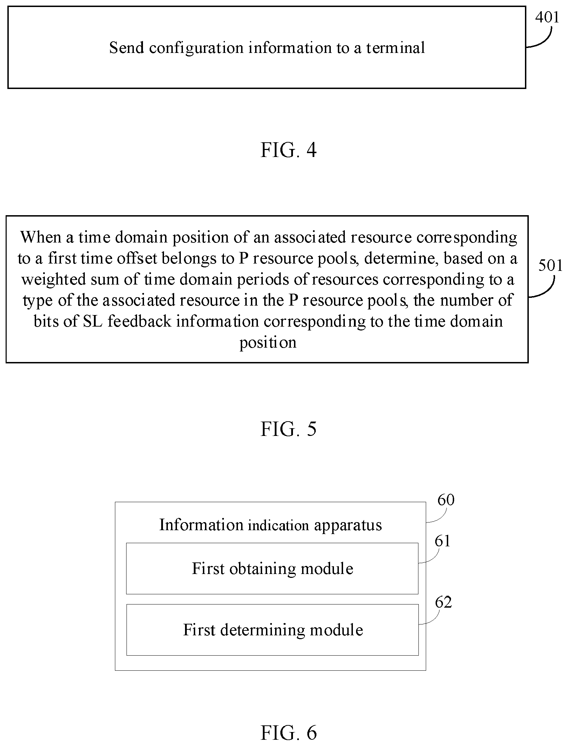

FIG. 4 is a flowchart of an information configuration method according to an embodiment of this application. The method is applied to a network device. As shown in FIG. 4, the method includes the following steps.

Step 401: Send configuration information to a terminal.

The configuration information indicates a dynamic time offset and a semi-static time offset that are used for determining a time domain resource in which SL feedback information is carried; and the semi-static time offset includes the dynamic time offset, or the dynamic time offset includes the semi-static time offset. For descriptions of the dynamic time offset and the semi-static time offset, refer to the descriptions in the embodiment shown in FIG. 3. Details are not described herein again.

It can be understood that the configuration information may include first configuration information and second configuration information, where the first configuration information is used to indicate the dynamic time offset, and the second configuration information is used to indicate the semi-static time offset. Further, the first configuration information and the second configuration information may be sent simultaneously, or may not be sent simultaneously, for example, the first configuration information is sent before the second configuration information is sent, or the second configuration information is sent before the first configuration information is sent.

Optionally, when at least one of the following preset conditions is met, the dynamic time offset includes the semi-static time offset, or the semi-static time offset includes the dynamic time offset.

(a) The terminal needs to monitor or receive SL DCI, for example, a DCI format 3_0.
(b) At least one grant-free SL semi-static scheduling configuration is configured for the terminal. For example, at least one SL configured grant type1 is configured.
(c) At least one grant-based SL semi-static scheduling configuration is configured for the terminal. For example, at least one SL configured grant type2 is configured.
(d) At least one grant-based SL semi-static scheduling configuration is activated for the terminal. For example, at least one SL configured grant type2 is activated.
(e) SL feedback information of the terminal is of a semi-static type or a type1. However, for example, when the type of the SL feedback information is a dynamic codebook or a type2 codebook, the requirement that the semi-static time offset belongs to the dynamic time offset does not need to be met.

It can be understood that the information determining method provided in this embodiment of this application is a network-side method corresponding to the method embodiment shown in FIG. 3. For specific explanations of related content, refer to the descriptions of the foregoing embodiment, and the same technical effects can be achieved. Details are not described herein again.

Third Embodiment

Currently, when a time domain position corresponding to a time offset used for determining a time domain resource in which SL feedback information is carried, that is, a time domain position of a resource associated with a resource for transmitting the SL feedback information, belongs to a plurality of resource pools, there is currently no corresponding method for specifying how the number of bits and/or content of corresponding SL feedback information is determined in this case to ensure consistent understanding of a terminal and a network device on the SL feedback information. Based on this, this application proposes the following method.

FIG. 5 is a flowchart of an information determining method according to an embodiment of this application. The method is applied to a communication device. For example, the communication device is a terminal or a network device.

As shown in FIG. 5, the method includes the following steps.

Step 501: When a time domain position of an associated resource corresponding to a first time offset belongs to P resource pools, determine, based on a weighted sum of time domain periods of a first resource, the number of bits of SL feedback information corresponding to the time domain position.

In this embodiment, a time domain period may also be interpreted as a time domain density. The time domain period is N slots, that is, there is an associated resource for every N slots. P is a positive integer greater than 1, and the first time offset is a time offset used for determining a time domain resource in which the SL feedback information is carried. The associated resource is a resource associated with a resource for transmitting the SL feedback information. The first resource is a resource corresponding to a type of the associated resource in the P resource pools.

It can be understood that the number of bits of the SL feedback information is determined in the foregoing manner, which can help a user and a base station achieve consistent understanding on the SL feedback information when there are a plurality of resource pools, thereby avoiding missing some SL feedback information and enhancing reliability.

In this embodiment, for a terminal, time offset information used for determining the time domain resource in which the SL feedback information is carried may be defined in a protocol, configured by a control node, preconfigured, or indicated by another terminal. An associated resource associated with the SL feedback information (in other words, an associated resource associated with a resource in which the SL feedback information is carried) may be determined based on the time offset information.

Optionally, the associated resource includes a time domain resource and/or a frequency domain resource.

Optionally, a type of the associated resource may be a PSFCH. For example, an associated PSFCH reception occasion (reception occasion) is determined.

Optionally, further, the P resource pools are resource pools on a same SL BWP or different SL BWPs.

Optionally, further, the P resource pools are resource pools on an active SL BWP or a configured SL BWP, or resource pools on a preconfigured SL BWP.

Optionally, further, the P resource pools are SL resource pools on a same carrier or different carriers.

For example, a reference point plus the time domain resource corresponding to the time offset is equal to the time domain resource for transmitting the SL feedback information. Therefore, it can be learned through backward deduction that the resource in which the SL feedback information is carried minus the time domain resource corresponding to the time offset is related to the SL feedback information.

Optionally, if a time domain position of an associated resource corresponding to a time offset (this time domain position may be a slot or a symbol in which this associated resource is carried) belongs to P resource pools and is denoted as {pool_0, pool_1, pool_2, ..., pool_p, ..., pool_(P - 1)}, the time domain position corresponds to T-bit SL feedback information, where $T = \sum_{p=0}^{P-1} \alpha_p * N_p$, $N_p$ is a time domain period or a time domain density of a resource corresponding to a type of the associated resource in the resource pool pool_p, that is, T is a weighted sum of periods or time domain densities of the associated resource in the P resource pools, and $\alpha_p$ is a weight of the resource pool pool_p, preferably, $\alpha_p$ = 1.

For example, if the type of the associated resource is a PSFCH, T is a sum of time domain periods or time domain densities of PSFCH resources in all of the P resource pools.

Further, the P resource pools may be resource pools that include resources corresponding to the type of the associated resource. For example, if the type of the associated resource is a PSFCH, the P resource pools are resource pools that include a slot in which the PSFCH is carried and that include PSFCHs but may or may not include PSFCHs in the slot. For another example, if an associated resource PSFCH is carried in a slot 1, the P resource pools are resource pools that include the slot 1 and that include PSFCHs. However, some resource pools may have a PSFCH in the slot 1, and some may have a PSFCH in a slot other than the slot 1.

Further, the P resource pools may be resource pools that include resources corresponding to the type of the associated resource and that include resources corresponding to the type of the associated resource at the time domain position of the associated resource. For example, if the type of the associated resource is a PSFCH, the P resource pools are resource pools that include a slot in which the PSFCH is carried and that include PSFCHs in the slot. For another example, if an associated resource PSFCH is located in a slot 1, the P resource pools are resource pools that include the slot 1 and that include PSFCHs in the slot 1.

Optionally, if one or more of the P resource pools include the time domain position of the associated resource but do not include a time domain resource corresponding to the type of the associated resource (for example, if an associated resource PSFCH is carried in a slot 1, the P resource pools include the slot 1, but some of the P resource pools do not have a PSFCH resource), or if one or more of the P resource pools include a resource corresponding to the type of the associated resource but there is no such resource in the time domain position of the associated resource (for example, if an associated resource PSFCH is carried in a slot 1, the P resource pools include the slot 1, and some of the P resource pools have PSFCH resources, but there is no PSFCH resource in the slot 1), during calculation of T (that is, the number of bits of the SL feedback information), $N_p$ corresponding to the one or more resource pools may be any of the following:

(1) 0; and
(2) a preset value, for example, a maximum value max$\{N_p\}$, a minimum value min$\{N_p\}$, or a mean of $N_p$ corresponding to another resource pool that includes this type of time domain resource.

This application is described in detail below with reference to specific embodiments.
Embodiment 1: An SL parameter field is introduced into UL DCI to indicate a SAI.
It is assumed that the UL DCI carries the SAI.
The UL DCI includes the SAI:

- The SAI is 0 or 1, or includes 2 bits:

  - optionally, in the case of a semi-static codebook, the SAI includes 1 bit; or
  - optionally, in the case of a dynamic codebook, the SAI includes 2 bits.

Another example is that the UL DCI includes the SAI:

- SAI - 0, 1, or 2 bits:

  - optionally, in the case of a semi-static codebook and when a user meets at least one of the following:

    - an SL CG type1 is configured;
    - an SL CG type2 is configured; and
    - monitoring SL DCI is configured,

    the SAI includes 1 bit;
  - optionally, in the case of a dynamic codebook and when a user meets at least one of the following:

    - an SL CG type1 is configured;
    - an SL CG type2 is configured; and
    - monitoring SL DCI is configured,

    the SAI includes 2 bits; or

further, optionally, if the foregoing cases are not met, the SAI may be a 0-bit SAI.
Another example is that the UL DCI includes a DAI and the SAI:

- a first DAI field:

  - in the case of a semi-static codebook, 1 bit is included; or
  - in the case of a dynamic codebook, 2 bits are included;

- a second DAI field - 0 or 2 bits, that is, the second DAI field may not be present and include 0 bit, or the second DAI field may include 2 bits:

  - in the case of a dynamic codebook and two sub-codebooks, 2 bits are included; or
  - otherwise, 0 bit is included; and

- the SAI - 0, 1, or 2 bits, that is, the SAI field may not be present and include 0 bit, or the SAI includes 1 bit or 2 bits:
- optionally, in the case of a semi-static codebook and when a user meets at least one of the following:

  - an SL CG type1 is configured;
  - an SL CG type2 is configured; and
  - monitoring SL DCI, for example, a DCI format 3_0, is configured, the SAI includes 1 bit;

- optionally, in the case of a dynamic codebook and when a user meets at least one of the following:

  - an SL CG type1 is configured;
  - an SL CG type2 is configured; and
  - monitoring SL DCI, for example, a DCI format 3_0, is configured, the SAI includes 2 bits; or

further, optionally, if the foregoing cases are not met, the SAI is a 0-bit SAI.

In this embodiment, the LTL DCI may be in a DCI format 0-1.

Embodiment 2: An existing field (for example, a DAI field) in UL DCI is used to indicate a SAI, and some fields are reused.

It is assumed that the UL DCI may indicate a grant for SL feedback information by using a first DAI field. The UL DCI includes:

- a first DAI field - 1 or 2 bits, that is, the first DAI field includes 1 bit, or the first DAI field includes 2 bits:
- in the case of a semi-static codebook, 1 bit is included, where optionally, if a PUSCH overlaps a PUCCH for SL feedback information, the bit indicates whether the PUSCH can be used for transmission of the SL feedback information; or if a PUSCH overlaps a PUCCH for Uu report information, the bit indicates whether the PUSCH can be used for transmission of the Uu report information; or
- in the case of a dynamic codebook, 2 bits are included; and
- a second DAI field - 0 or 2 bits, that is, the second DAI field may not be present and include 0 bit, or the second DAI field may include 2 bits:
- in the case of a dynamic codebook and two sub-codebooks, 2 bits are included; or
- otherwise, 0 bit is included; and
- optionally, the DCI may further have a SAI - 0 or 2 bits:
- in the case of a dynamic codebook, 2 bits are included, which are optionally used to indicate a SAI; or
- otherwise, 0 bit is included.

Another example is as follows:

It is assumed that the UL DCI indicates a SAI by using a DAI field. The UL DCI includes:

- a first DAI field - 1 or 2 bits, that is, the first DAI field includes 1 bit, or the first DAI field includes 2 bits:
- in the case of a semi-static codebook, 1 bit is included, where optionally, if a PUSCH overlaps a PUCCH for SL report information, the bit indicates whether the PUSCH can be used for transmission of the SL report information; or if a PUSCH overlaps a PUCCH for Uu report information, the bit indicates whether the PUSCH can be used for transmission of the Uu report information; or
- in the case of a dynamic codebook, 2 bits are included, where optionally, if a PUSCH overlaps a PUCCH for SL report information, the bits indicate a SAI, for example, a SL DCI number or a total number of pieces of SL DCI; or if a PUSCH overlaps a PUCCH for Uu report information, the bits indicate a DAI, for example, a DL DCI number or a total number of pieces of DL DCI; and
- a first DAI field - 0 or 2 bits, that is, the first DAI field may not be present and include 0 bit, or the first DAI field includes 2 bits:
- in the case of a dynamic codebook and two sub-codebooks, 2 bits are included, where optionally, if a PUSCH overlaps a PUCCH for SL report information, a user ignores the field, or the field is set to 00 or a redundancy value; or
- otherwise, 0 bit is included.

In this example, the LTL DCI may be in a DCI format 0-1.

Embodiment 3: A type1 codebook (a semi-static codebook) is determined based on a SAI in DCI.

If a user wants to transmit SL feedback information in a PUSCH not scheduled by DCI (for example, a PUSCH on a LTL configured grant) or in a PUSCH scheduled by a DCI format 0_0, for example, reusing SL HARQ-ACK information in the PUSCH for transmission:

- optionally, if the user does not have SL feedback information corresponding to SL DCI (for example, the user does not receive SL DCI associated with a PSFCH) or SL feedback information corresponding to an SL CG (for example, the user does not have SL feedback information corresponding to a PSFCH associated with an SL CG), the user does not reuse SL HARQ-ACK information in the PUSCH; or
- optionally, if no PSSCH is transmitted in a PSSCH occasion set corresponding to a resource for SL feedback information (for example, no PSSCH is scheduled by SL DCI or is transmitted on an SL CG resource in the occasion set), the user does not reuse SL HARQ-ACK information in the PUSCH; or

- otherwise, optionally, the user generates SL feedback information, and optionally, sends the SL feedback information in the PUSCH.

For SL DCI later than the foregoing LTL DCI (a DCI format 0_0 or a DCI format 0_1), for example, SL DCI whose start point is later than the UL DCI, a bit corresponding to the SL DCI in the SL feedback information is set to a NACK. The user does not want to receive, in the first N2' symbols of the PUSCH, DCI for downlink BWP switching or uplink BWP switching, where N2' is a processing delay. For example, when the SL feedback information is reused in the PUSCH, the user does not want to receive, in the first N2' symbols of the PUSCH, DCI for downlink BWP switching or uplink BWP switching, where N2' is a processing delay. Optionally, N2' is related to at least one of the number of PSFCHs received by the user, a capability of a PSFCH received by the user, the number of bits included in the SL feedback information, an SL SCS (subcarrier spacing, subcarrier spacing), and a PUSCH SCS.

If the user wants to transmit SL feedback information in a PUSCH scheduled by a DCI format 0_1, for example, reuse SL HARQ-ACK information in the PUSCH for transmission: if $V_{\text{T-SAI}}^{\text{UL}} = 1$ for a SAI in the DCI format 0_1, the user generates SL feedback information and reuses it for transmission; or if SAI = 0 in the DCI format 0_1, the user cannot reuse SL feedback information in the PUSCH for transmission. Alternatively, when SL feedback information includes only feedback information corresponding to one piece of SL DCI and a value of a counter SAI field in the SL DCI is 1, or when SL feedback information includes only feedback information corresponding to one SL CG, the SL feedback information can be reused in the PUSCH.

In the foregoing example, an implementation is as follows: It is assumed that the SAI in the DCI format 0_1 is '0'; otherwise, $V_{\text{T-SAI}}^{\text{UL}} = 1$.

In the foregoing example, an implementation is replacing $V_{\text{T-SAI}}^{\text{UL}}$ with $V_{\text{C-SAI}}^{\text{SL}}$.

Embodiment 4: A type2 codebook (a dynamic codebook) is determined based on a SAI in DCI.

If a user wants to transmit SL feedback information in a PUSCH not scheduled by DCI (for example, a PUSCH on a LTL configured grant) or in a PUSCH scheduled by a DCI format 0_0, for example, reusing SL HARQ-ACK information in the PUSCH for transmission:

- optionally, if the user does not have SL feedback information corresponding to SL DCI (for example, the user does not receive SL DCI associated with a PSFCH) or SL feedback information corresponding to an SL CG (for example, the user does not have SL feedback information corresponding to a PSFCH associated with an SL CG), the user does not reuse SL HARQ-ACK information in the PUSCH; or
- otherwise, optionally, SL HARQ-ACK information is reused in the PUSCH for transmission.

If the user wants to transmit SL feedback information in a PUSCH scheduled by a DCI format 0_1, for example, reusing SL HARQ-ACK information in the PUSCH for transmission, the user generates SL feedback information. In the generation process:

- optionally, count information $V_{\text{temp}}$ of SL DCI is set to $V_{\text{temp}} = V_{\text{T-SAI}}^{\text{UL}}$, where $V_{\text{T-SAI}}^{\text{UL}}$ is a value corresponding to a SAI in the DCI format 0_1 (the value corresponding to the SAI may be determined based on the following Table 1).

If the value of the SAI in the DCI format 0_1 is $V_{\text{T-SAI}}^{\text{UL}} = 4$, and if the user does not have SL feedback information corresponding to SL DCI (for example, the user does not receive SL DCI associated with a PSFCH) or SL feedback information corresponding to an SL CG (for example, the user does not have SL feedback information corresponding to a PSFCH associated with an SL CG), the user does not reuse SL HARQ-ACK information in the PUSCH.

**Table 1 Correspondence between the SAI in the UL DCI and a value**

| SAI MSB, LSB | $V_{T-SAI}^{UL}$ | Number of pieces of SL DCI associated with SL feedback information, which is denoted as **Y**, where **Y** ≥ **1** |
|---|---|---|
| 0, 0 | 1 | $(Y - 1) mod 4 + 1 = 1$ |
| 0, 1 | 2 | $(Y - 1) mod 4 + 1 = 2$ |
| 1, 0 | 3 | $(Y - 1) mod 4 + 1 = 3$ |

(continued)

| SAI MSB, LSB | $V_{T-\mathrm{S}\mathrm{AI}}^{UL}$ | Number of pieces of SL DCI associated with SL feedback information, which is denoted as **Y**, where **Y ≥ 1** |
|---|---|---|
| 1, 1 | 4 | *(Y - 1)mod*4 + 1 = 4 |

Alternatively, the following table is used, and $V_{\mathrm{T}-\mathrm{S}\mathrm{AI}}^{\mathbf{UL}}$ in the foregoing example is replaced with $V_{\mathbf{C}-\mathrm{S}\mathrm{AI}}^{\mathrm{SL}}$ .

**Table 2 Correspondence between the SAI in the UL DCI and a value**

| SAI MSB, LSB | $V_{\boldsymbol{C}-\mathrm{S}\mathrm{AI}}^{\mathrm{SL}}$ | Number of pieces of SL DCI associated with SL feedback information, which is denoted as **Y**, where **Y ≥ 1** |
|---|---|---|
| 0, 0 | 1 | *(Y - 1)mod*4 + 1 = 1 |
| 0, 1 | 2 | *(Y - 1)mod*4 + 1 = 2 |
| 1, 0 | 3 | *(Y - 1)mod*4 + 1 = 3 |
| 1, 1 | 4 | *(Y - 1)mod*4 + 1 = 4 |

Embodiment 5: A semi-static time offset K1 belongs to a dynamic time offset K1.

In an implementation, if at least one SL configured grant type1 is configured for user equipment and at least one of the following is met:

1. a monitoring DCI format 3_0 is configured for the user equipment;
2. an SL configured grant type2 is configured for the user equipment; and
3. at least one SL configured grant type2 is activated for the user equipment,

a semi-static time offset corresponding to the SL configured grant type1 should belong to a dynamic time offset.

In another implementation, if at least one SL configured grant type1 is configured for user equipment, a codebook type is a type1 or semi-static (for example, pdsch-HARQ-ACK-Codebook = semi-static), and at least one of the following is met:

1. a monitoring DCI format 3_0 is configured for the user equipment;
2. an SL configured grant type2 is configured for the user equipment; and
3. at least one SL configured grant type2 is activated for the user equipment,

a semi-static time offset corresponding to the SL configured grant type1 should belong to a dynamic time offset.

Embodiment 6: The number of bits of SL feedback information is determined.

For example, when a slot determined based on a time offset K1 belongs to P sidelink resource pools and includes a PSFCH resource, and a PSFCH period periodPSFCHresource of a resource pool pool_p in the P resource pools is denoted as $N_{\mathrm{PSFCH\_p}}$, the number of pieces of SL feedback information corresponding to the slot is

$$T = \sum_{\mathrm{p}=0}^{\mathrm{P}-1} \alpha_{\mathrm{p}} * N_{\mathrm{PSFCH\_p}}$$ , where $\alpha_{\mathrm{p}}$ indicates a weight.

For another example, if a slot determined based on a time offset K1 belongs to P sidelink resource pools and includes a PSFCH resource, the P resource pools are denoted as {pool_0, pool_1, pool_2, ..., pool_p, ..., pool_(P - 1)}, and a PSFCH period periodPSFCHresource of a resource pool pool_p in the P resource pools is denoted as $N_{\mathrm{PSFCH\_p}}$, corresponding SL feedback information may be determined by using the following method:

traversing the P resource pools {pool_0, pool_1, pool_2, ..., pool_p, ..., pool_(P - 1)}, for example, in descending order, ascending order, or another order of numbers, for example,

setting p=0;

for each resource pool_p, if p < P, entering a while loop;

setting $n_F = 0$, which indicates an index of an SL slot within a PSFCH period in the resource pool_p; and

if $n_F < N_{\mathrm{PSFCH}}$, entering a while loop;

$$M_A = M_A \cup j;$$

$$j = j + 1;$$

and

$$n_F = n_F + 1;$$

terminating the while loop; and

$$p = p + 1,$$

terminating the while loop.

An interpretation of $M_A$ is a PSSCH transmission occasion associated with a resource in which SL feedback information is carried, and j is used to indicate the number of bits of the SL feedback information.

It should be noted that the information indication method provided in the embodiments of this application may be performed by an information indication apparatus, or by a control module in such information indication apparatus for performing or loading the information indication method. In the embodiments of this application, an information indication apparatus performing or loading the information indication method is used as an example for describing the information indication method provided in the embodiments of this application.

Fourth Embodiment

FIG. 6 is a schematic structural diagram of an information indication apparatus according to an embodiment of this application. The apparatus is applied to a terminal. As shown in FIG. 6, the information indication apparatus 60 includes:

a first obtaining module 61, configured to obtain control signaling, where the control signaling is UL DCI or higher layer signaling; and
a first determining module 62, configured to determine related information of SL feedback information based on the control signaling, where
the control signaling includes at least one of a first parameter field and a DAI field, the first parameter field is used to indicate related information of SL feedback information, and the DAI field is used to indicate related information of SL feedback information or related information of Uu feedback information.

Optionally, the related information of SL feedback information includes at least one of the following:

a grant for SL feedback information; and
count information of SL downlink control information SL DCI, where the count information includes at least one of a counter sidelink assignment index cSAI of the SL DCI and a total sidelink assignment index tSAI of the SL DCI.

Optionally, the case of the DAI field indicating related information of SL feedback information includes at least one of the following:

if the UL DCI includes a first DAI field, the first DAI field indicates the grant for the SL feedback information;
if the UL DCI includes a first DAI field, the first DAI field indicates the count information of the SL DCI;
if the UL DCI includes a first DAI field and a second DAI field, the first DAI field indicates a cSAI, and the second DAI field indicates a tSAI; or the first DAI field indicates a tSAI, and the second DAI field indicates a cSAI; and
if the UL DCI includes a first DAI field and a second DAI field, the first DAI field indicates a cSAI or a tSAI, and the second DAI field is ignored, or the second DAI field indicates a preset value; or the second DAI field indicates a cSAI or a tSAI, and the first DAI field is ignored, or the first DAI field indicates a preset value, where the preset value is any one of the following: a value with all 1s, a value with all 0s, an invalid value, or a redundancy value.

Optionally, the control signaling further includes type indication information, where the type indication information is used to indicate that the control signaling indicates related information of SL feedback information, or the type indication information is used to indicate that the control signaling indicates related information of Uu feedback information.

Optionally, in a case that at least one of the following conditions is met, the control signaling indicates the grant for the SL feedback information and/or the count information, of the SL DCI, that has a first preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a semi-static type.

Optionally, in a case that at least one of the following conditions is met, the control signaling indicates a SAI, of the SL DCI, that has a second preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
a type of SL feedback information of the terminal is dynamic.

Optionally, the information indication apparatus 60 may further include:
a transmitting module, configured to: in a case that an uplink resource scheduled by the UL DCI collides with a resource of the SL feedback information, use the uplink resource for transmission of SL feedback information.

It can be understood that the information indication apparatus 60 provided in this embodiment of this application is capable of implementing the processes implemented in the method embodiment shown in FIG. 1, with the same technical effects achieved. To avoid repetition, details are not described herein again.

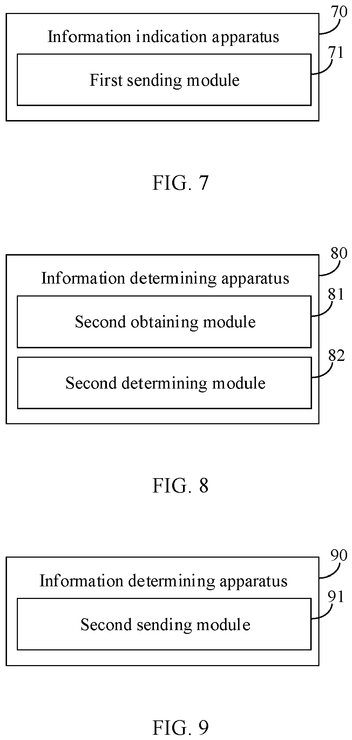

FIG. 7 is a schematic structural diagram of an information indication apparatus according to an embodiment of this application. The apparatus is applied to a network device. As shown in FIG. 7, the information indication apparatus 70 includes:

a first sending module 71, configured to send control signaling to a terminal, where
the control signaling is used to indicate related information of SL feedback information;
the control signaling includes at least one of a first parameter field and a DAI field, the first parameter field is used to indicate related information of SL feedback information, and the DAI field is used to indicate related information of SL feedback information or related information of Uu feedback information; and
the control signaling is UL DCI or higher layer signaling.

Optionally, the related information of SL feedback information includes at least one of the following:

a grant for SL feedback information; and
count information of SL downlink control information SL DCI, where the count information includes at least one of a counter sidelink assignment index cSAI of the SL DCI and a total sidelink assignment index tSAI of the SL DCI.

Optionally, the case of the DAI field indicating related information of SL feedback information includes at least one of the following:

if the UL DCI includes a first DAI field, the first DAI field indicates the grant for the SL feedback information;
if the UL DCI includes a first DAI field, the first DAI field indicates the count information of the SL DCI;
if the UL DCI includes a first DAI field and a second DAI field, the first DAI field indicates a cSAI, and the second DAI field indicates a tSAI; or the first DAI field indicates a tSAI, and the second DAI field indicates a cSAI; and
if the UL DCI includes a first DAI field and a second DAI field, the first DAI field indicates a cSAI or a tSAI, and the second DAI field is ignored, or the second DAI field indicates a preset value; or the second DAI field indicates a cSAI or a tSAI, and the first DAI field is ignored, or the first DAI field indicates a preset value, where the preset value is any one of the following: a value with all 1s, a value with all 0s, an invalid value, or a redundancy value.

Optionally, the control signaling further includes type indication information, where the type indication information is used to indicate that the control signaling indicates related information of SL feedback information, or the type indication information is used to indicate that the control signaling indicates related information of Uu feedback information.

Optionally, in a case that at least one of the following conditions is met, the control signaling indicates the grant for the SL feedback information and/or the count information, of the SL DCI, that has a first preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a semi-static type.

Optionally, in a case that at least one of the following conditions is met, the control signaling indicates a SAI, of the SL DCI, that has a second preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
a type of SL feedback information of the terminal is dynamic.

It can be understood that the information indication apparatus 70 provided in this embodiment of this application is capable of implementing the processes implemented in the method embodiment shown in FIG. 2, with the same technical effects achieved. To avoid repetition, details are not described herein again.

It should be noted that the information determining method provided in the embodiments of this application may be performed by an information determining apparatus, or by a control module in such information determining apparatus for performing or loading the information determining method. In the embodiments of this application, an information determining apparatus performing or loading the information determining method is used as an example for describing the information determining method provided in the embodiments of this application.

FIG. 8 is a schematic structural diagram of an information determining apparatus according to an embodiment of this application. The apparatus is applied to a terminal. As shown in FIG. 8, the information determining apparatus 80 includes:

a second obtaining module 81, configured to obtain a dynamic time offset and a semi-static time offset that are used for determining a time domain resource in which SL feedback information is carried; and
a second determining module 82, configured to determine any one of the following: the semi-static time offset includes the dynamic time offset, or the dynamic time offset includes the semi-static time offset.

It can be understood that the information determining apparatus 80 provided in this embodiment of this application is capable of implementing the processes implemented in the method embodiment shown in FIG. 3, with the same technical effects achieved. To avoid repetition, details are not described herein again.

FIG. 9 is a schematic structural diagram of an information determining apparatus according to an embodiment of this application. The apparatus is applied to a network device. As shown in FIG. 9, the information determining apparatus 90 includes:

a second sending module 91, configured to send configuration information to a terminal, where
the configuration information indicates a dynamic time offset and a semi-static time offset that are used for determining a time domain resource in which SL feedback information is carried; and the semi-static time offset includes the dynamic time offset, or the dynamic time offset includes the semi-static time offset. For descriptions of the dynamic time offset and the semi-static time offset, refer to the descriptions in the embodiment shown in FIG. 3. Details are not described herein again.

Optionally, when at least one of the following preset conditions is met, the dynamic time offset includes the semi-static time offset, or the dynamic time offset includes the dynamic time offset.

(a) The terminal needs to monitor or receive SL DCI, for example, a DCI format 3_0.
(b) At least one grant-free SL semi-static scheduling configuration is configured for the terminal. For example, at least one SL configured grant type1 is configured.
(c) At least one grant-based SL semi-static scheduling configuration is configured for the terminal. For example, at least one SL configured grant type2 is configured.

(d) At least one grant-based SL semi-static scheduling configuration is activated for the terminal. For example, at least one SL configured grant type2 is activated.

(e) SL feedback information of the terminal is of a semi-static type or a type1. However, for example, when the type of the SL feedback information is a dynamic codebook or a type2 codebook, the requirement that the semi-static time offset belongs to the dynamic time offset does not need to be met.

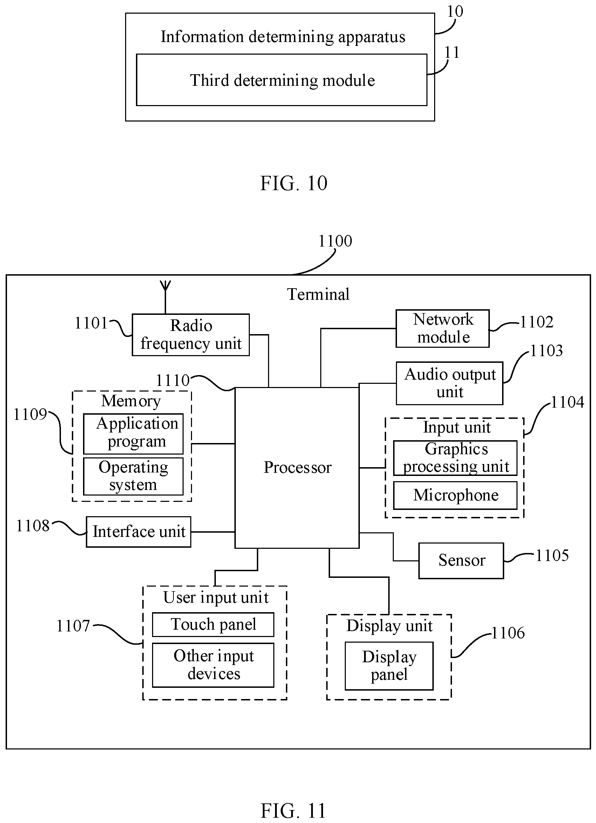

FIG. 10 is a schematic structural diagram of an information determining apparatus according to an embodiment of this application. The apparatus is applied to a communication device. For example, the communication device is a terminal or a network device. As shown in FIG. 10, the information determining apparatus 10 includes:

a third determining module 11, configured to: when a time domain position of an associated resource corresponding to a first time offset belongs to P resource pools, determine, based on a weighted sum of time domain periods of a first resource, the number of bits of SL feedback information corresponding to the time domain position, where P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

It can be understood that the information determining apparatus 10 provided in this embodiment of this application is capable of implementing the processes implemented in the method embodiment shown in FIG. 5, with the same technical effects achieved. To avoid repetition, details are not described herein again.

The information indication apparatus or the information determining apparatus in the embodiments of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a server, a network attached storage (Network Attached Storage, NAS), a personal computer (personal computer, PC), a television (television, TV), a teller machine, or a self-service machine. This is not specifically limited in the embodiments of this application.

The information indication apparatus or the information determining apparatus in the embodiments of this application may be an apparatus with an operating system. The operating system may be an Android (Android) operating system, may be an iOS operating system, or may be another possible operating system. This is not specifically limited in the embodiments of this application.

An embodiment of this application further provides a communication device, including a processor, a memory, and a program or instructions stored in the memory and capable of running on the processor. When the program or instructions are executed by the processor, the processes of the method embodiment shown in any one of FIG. 1 to FIG. 5 may be implemented, with the same technical effects achieved. To avoid repetition, details are not described herein again. Optionally, the communication device may be a terminal or a network device.

FIG. 11 is a schematic diagram of a hardware structure of a terminal for implementing the embodiments of the present invention. The terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (for example, a battery) that supplies power to the components. The power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

Optionally, the processor 1110 may be configured to: obtain control signaling, where the control signaling is UL DCI or higher layer signaling; and determine related information of SL feedback information based on the control signaling, where the control signaling includes at least one of a first parameter field and a DAI field, the first parameter field is used to indicate related information of SL feedback information, and the DAI field is used to indicate related information of SL feedback information or related information of Uu feedback information.

Optionally, the processor 1110 may be configured to: obtain a dynamic time offset and a semi-static time offset that are used for determining a time domain resource in which SL feedback information is carried; and in a case that the dynamic time offset includes one or more time offsets, determine any one of the following: the semi-static time offset includes the dynamic time offset, or the dynamic time offset includes the semi-static time offset.

Optionally, the processor 1110 may be configured to: when a time domain position of an associated resource corresponding to a first time offset belongs to P resource pools, determine, based on a weighted sum of time domain periods of a first resource, the number of bits of SL feedback information corresponding to the time domain position, where P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

It can be understood that the terminal 1100 in this embodiment of this application is capable of implementing the processes implemented in the method embodiment shown in FIG. 1, FIG. 3, or FIG. 5, with the same beneficial effects achieved. To avoid repetition, details are not described herein again.

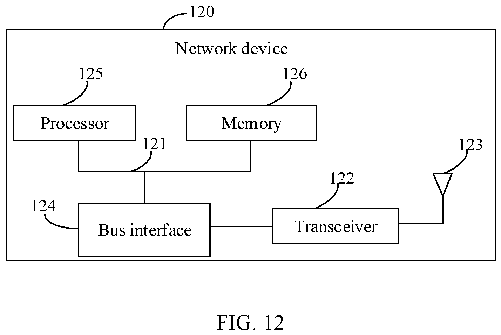

FIG. 12 is a schematic diagram of a hardware structure of a network device for implementing the embodiments of the present invention. The network device 120 includes but is not limited to a bus 121, a transceiver 122, an antenna 123, a bus interface 124, a processor 125, and a memory 126.

In this embodiment of this application, the network device 120 further includes a program or instructions stored in the memory 126 and capable of running on the processor 125.

Optionally, when the program or instructions are executed by the processor 125, the following step is implemented:

sending control signaling to a terminal, where the control signaling includes at least one of a first parameter field and a DAI field, the control signaling is used to indicate related information of SL feedback information, the first parameter field is used to indicate related information of SL feedback information, the DAI field is used to indicate related information of SL feedback information or related information of Uu feedback information, and the control signaling is UL DCI or higher layer signaling.

Optionally, when the program or instructions are executed by the processor 125, the following step is implemented:

sending configuration information to a terminal, where the configuration information indicates a dynamic time offset and a semi-static time offset that are used for determining a time domain resource in which SL feedback information is carried; and the semi-static time offset includes the dynamic time offset, or the dynamic time offset includes the semi-static time offset.

Optionally, when the program or instructions are executed by the processor 125, the following step is implemented:

when a time domain position of an associated resource corresponding to a first time offset belongs to P resource pools, determining, based on a weighted sum of time domain periods of a first resource, the number of bits of SL feedback information corresponding to the time domain position, where P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

The network device 120 in this embodiment of this application is capable of implementing the processes implemented in the method embodiment shown in FIG. 2, FIG. 4, or FIG. 5, with the same beneficial effects achieved. To avoid repetition, details are not described herein again.

The transceiver 122 is configured to receive and send data under control of the processor 125.

In FIG. 12, a bus architecture (represented by the bus 121), that is, the bus 121, may include any quantity of interconnected buses and bridges, and the bus 121 connects various circuits of one or more processors represented by the processor 125 and a memory represented by the memory 126. The bus 121 may further connect various other circuits such as a peripheral device, a voltage regulator, and a power management circuit. These are all well-known in the art, and therefore are not further described in this specification. The bus interface 124 provides an interface between the bus 121 and the transceiver 122. The transceiver 122 may be one element, or may be a plurality of elements, for example, a plurality of receivers and transmitters, and provides a unit for communicating with various other apparatuses on a transmission medium. Data processed by the processor 125 is transmitted on a wireless medium through the antenna 123. Further, the antenna 123 also receives data and transmits the data to the processor 125.

The processor 125 is responsible for managing the bus 121 and general processing, and may further provide various functions, including timing, a peripheral interface, voltage regulation, power management, and other control functions. The memory 126 may be configured to store data that is used by the processor 125 when the processor 125 performs an operation.

Optionally, the processor 125 may be a CPU, an ASIC, an FPGA, or a CPLD.

An embodiment of this application further provides a readable storage medium, where the readable storage medium stores a program or instructions, and when the program or instructions are executed by a processor, the processes of the method embodiment shown in any one of FIG. 1 to FIG. 5 may be implemented, with the same technical effects achieved. To avoid repetition, details are not described herein again.

The processor is a processor in the network device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions, so as to implement the processes of the method embodiment shown in any one of FIG. 1 to FIG. 5, with the same technical effects achieved. To avoid repetition, details are not described herein again.

It should be understood that the chip mentioned in this embodiment of this application may also be referred to as a system-level chip, a system chip, a chip system, a system-on-a-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. In addition, it should be noted that the scopes of the method and apparatus in the implementations of this application are not limited to performing functions in the sequence shown or described, and may further include performing functions at substantially the same time or in a reverse sequence according to the involved functions. For example, the described method may be performed in a sequence different from that described, and steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, a person of ordinary skill in the art may develop many other manners without departing from principles of this application and the protection scope of the claims, and all such manners fall within the protection scope of this application.

**Claims**

1. An information indication method, applied to a terminal and comprising:

   obtaining control signaling, wherein the control signaling is uplink-related downlink control information UL DCI; and
   determining related information of sidelink SL feedback information based on the control signaling, wherein the control signaling comprises at least one of a first parameter field and a downlink assignment index DAI field, the first parameter field is used to indicate related information of SL feedback information, and the DAI field is used to indicate related information of SL feedback information or related information of Uu feedback information.

2. The method according to claim 1, wherein the related information of SL feedback information comprises at least one of the following:

   a grant for SL feedback information; and
   counting information of SL downlink control information SL DCI, wherein the count information comprises at least one of a counter sidelink assignment index cSAI of the SL DCI and a total sidelink assignment index tSAI of the SL DCI.

3. The method according to claim 1, wherein the case of the DAI field indicating related information of SL feedback information comprises at least one of the following:

   if the LTL DCI comprises a first DAI field, the first DAI field indicates a grant for SL feedback information;

if the UL DCI comprises a first DAI field, the first DAI field indicates count information of SL DCI;

if the UL DCI comprises a first DAI field and a second DAI field, the first DAI field indicates a cSAI, and the second DAI field indicates a tSAI; or the first DAI field indicates a tSAI, and the second DAI field indicates a cSAI; and

if the UL DCI comprises a first DAI field and a second DAI field, the first DAI field indicates a cSAI or a tSAI, and, the second DAI field is ignored or the second DAI field indicates a preset value; or the second DAI field indicates a cSAI or a tSAI, and, the first DAI field is ignored or the first DAI field indicates a preset value, wherein the preset value is any one of the following: a value with all 1s, a value with all 0s, an invalid value, or a redundancy value.

4. The method according to claim 1, wherein the control signaling further comprises type indication information, and the type indication information is used to indicate that the control signaling indicates related information of SL feedback information, or the type indication information is used to indicate that the control signaling indicates related information of Uu feedback information.

5. The method according to claim 1, wherein the control signaling comprises at least one of the following:
radio resource control RRC signaling, system information block SIB, medium access control MAC layer signaling, radio link control RLC layer signaling, packet data convergence protocol PDCP layer signaling, and service data adaptation protocol SDAP layer signaling.

6. The method according to claim 1, wherein in a case that at least one of the following conditions is met, the control signaling indicates a grant for SL feedback information and/or count information, of SL DCI, that has a first preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a semi-static type.

7. The method according to claim 1, wherein in a case that at least one of the following conditions is met, the control signaling indicates count information, of SL DCI, that has a second preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a dynamic type.

8. The method according to claim 1, further comprising:
in a case that an uplink resource scheduled by the UL DCI collides with a resource of the SL feedback information, using the uplink resource for transmission of SL feedback information.

9. An information indication method, applied to a network device and comprising:

sending control signaling to a terminal, wherein
the control signaling is used to indicate related information of SL feedback information;
the control signaling comprises at least one of a first parameter field and a DAI field, the first parameter field is used to indicate related information of SL feedback information, and the DAI field is used to indicate related information of SL feedback information or related information of Uu feedback information; and
the control signaling is UL DCI or higher layer signaling.

10. The method according to claim 9, wherein the related information of SL feedback information comprises at least one of the following:

a grant for SL feedback information; and
count information of SL DCI, wherein the count information comprises at least one of a cSAI of the SL DCI and a tSAI of the SL DCI.

11. The method according to claim 9, wherein the case of the DAI field indicating related information of SL feedback information comprises at least one of the following:

if the LTL DCI comprises a first DAI field, the first DAI field indicates a grant for SL feedback information;
if the UL DCI comprises a first DAI field, the first DAI field indicates count information of SL DCI;
if the UL DCI comprises a first DAI field and a second DAI field, the first DAI field indicates a cSAI, and the second DAI field indicates a tSAI; or the first DAI field indicates a tSAI, and the second DAI field indicates a cSAI; and
if the UL DCI comprises a first DAI field and a second DAI field, the first DAI field indicates a cSAI or a tSAI, and the second DAI field is ignored, or the second DAI field indicates a preset value; or the second DAI field indicates a cSAI or a tSAI, and the first DAI field is ignored, or the first DAI field indicates a preset value, wherein the preset value is any one of the following: a value with all 1s, a value with all 0s, an invalid value, or a redundancy value.

12. The method according to claim 9, wherein the control signaling further comprises type indication information, and the type indication information is used to indicate that the control signaling indicates related information of SL feedback information, or the type indication information is used to indicate that the control signaling indicates related information of Uu feedback information.

13. The method according to claim 9, wherein in a case that at least one of the following conditions is met, the control signaling indicates count information, of SL DCI, that has a first preset number of bits or a grant for SL feedback information:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a semi-static type.

14. The method according to claim 9, wherein in a case that at least one of the following conditions is met, the control signaling indicates count information, of SL DCI, that has a second preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
a type of SL feedback information of the terminal is dynamic.

15. An information determining method, applied to a terminal and comprising:

obtaining a dynamic time offset and a semi-static time offset that are used for determining a time domain resource in which SL feedback information is carried; and
determining any one of the following: the semi-static time offset comprises the dynamic time offset, or the dynamic time offset comprises the semi-static time offset.

16. The method according to claim 15, wherein in a case that at least one of the following preset conditions is met, any one of the following is met: the semi-static time offset comprises the dynamic time offset, or the dynamic time offset comprises the semi-static time offset:

the terminal needs to monitor or receive SL DCI;
at least one grant-free SL semi-static scheduling configuration is configured for the terminal;
at least one grant-based SL semi-static scheduling configuration is configured for the terminal;
at least one grant-based SL semi-static scheduling configuration is activated for the terminal; and
SL feedback information of the terminal is of a semi-static type.

17. An information configuration method, applied to a network device and comprising:

sending configuration information to a terminal, wherein

the configuration information indicates a dynamic time offset and a semi-static time offset that are used for determining a time domain resource in which SL feedback information is carried; and the semi-static time offset comprises the dynamic time offset, or the dynamic time offset comprises the semi-static time offset.

18. An information determining method, applied to a communication device and comprising:

when a time domain position of an associated resource corresponding to a first time offset belongs to P resource pools, determining, based on a weighted sum of time domain periods of a first resource, the number of bits of SL feedback information corresponding to the time domain position, wherein P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

19. The method according to claim 18, wherein the P resource pools are resource pools that comprise resources corresponding to the type of the associated resource;
or
the P resource pools are resource pools that comprise resources corresponding to the type of the associated resource and that comprise resources corresponding to the type of the associated resource at the time domain position of the associated resource.

20. An information indication apparatus, applied to a terminal and comprising:

a first obtaining module, configured to obtain control signaling, wherein the control signaling is UL DCI or higher layer signaling; and
a first determining module, configured to determine related information of SL feedback information based on the control signaling, wherein
the control signaling comprises at least one of a first parameter field and a DAI field, the first parameter field is used to indicate related information of SL feedback information, and the DAI field is used to indicate related information of SL feedback information or related information of Uu feedback information.

21. The apparatus according to claim 20, wherein the related information of SL feedback information comprises at least one of the following:

a grant for SL feedback information; and
count information of SL downlink control information SL DCI, wherein the count information comprises at least one of a counter sidelink assignment index cSAI of the SL DCI and a total sidelink assignment index tSAI of the SL DCI.

22. The apparatus according to claim 20, wherein the case of the DAI field indicating related information of SL feedback information comprises at least one of the following:

if the LTL DCI comprises a first DAI field, the first DAI field indicates a grant for SL feedback information;
if the UL DCI comprises a first DAI field, the first DAI field indicates count information of SL DCI;
if the UL DCI comprises a first DAI field and a second DAI field, the first DAI field indicates a cSAI, and the second DAI field indicates a tSAI; or the first DAI field indicates a tSAI, and the second DAI field indicates a cSAI; and
if the UL DCI comprises a first DAI field and a second DAI field, the first DAI field indicates a cSAI or a tSAI, and the second DAI field is ignored, or the second DAI field indicates a preset value; or the second DAI field indicates a cSAI or a tSAI, and the first DAI field is ignored, or the first DAI field indicates a preset value, wherein the preset value is any one of the following: a value with all 1s, a value with all 0s, an invalid value, or a redundancy value.

23. The apparatus according to claim 20, wherein the control signaling further comprises type indication information, and the type indication information is used to indicate that the control signaling indicates related information of SL feedback information, or the type indication information is used to indicate that the control signaling indicates related information of Uu feedback information.

24. The apparatus according to claim 20, wherein in a case that at least one of the following conditions is met, the control signaling indicates a grant for SL feedback information and/or count information, of SL DCI, that has a first preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
SL feedback information of the terminal is of a semi-static type.

25. The apparatus according to claim 20, wherein in a case that at least one of the following conditions is met, the control signaling indicates a SAI, of SL DCI, that has a second preset number of bits:

at least one grant-free SL semi-static scheduling configuration is configured for the terminal;
at least one grant-based SL semi-static scheduling configuration is configured for the terminal;
at least one grant-based SL semi-static scheduling configuration is activated for the terminal;
the terminal needs to monitor or receive SL DCI; and
a type of SL feedback information of the terminal is dynamic.

26. The apparatus according to claim 20, further comprising:
a transmitting module, configured to: in a case that an uplink resource scheduled by the UL DCI collides with a resource of the SL feedback information, use the uplink resource for transmission of SL feedback information.

27. An information indication apparatus, applied to a network device and comprising:

a first sending module, configured to send control signaling to a terminal, wherein
the control signaling is used to indicate related information of SL feedback information;
the control signaling comprises at least one of a first parameter field and a DAI field, the first parameter field is used to indicate related information of SL feedback information, and the DAI field is used to indicate related information of SL feedback information or related information of Uu feedback information; and
the control signaling is UL DCI or higher layer signaling.

28. An information determining apparatus, applied to a terminal and comprising:

a second obtaining module, configured to obtain a dynamic time offset and a semi-static time offset that are used for determining a time domain resource in which SL feedback information is carried; and
a second determining module, configured to determine one of the following: the semi-static time offset comprises the dynamic time offset, or the dynamic time offset comprises the semi-static time offset.

29. An information configuration apparatus, applied to a network device and comprising:

a second sending module, configured to send configuration information to a terminal, wherein
the configuration information indicates a dynamic time offset and a semi-static time offset that are used for determining a time domain resource in which SL feedback information is carried; and the semi-static time offset comprises the dynamic time offset, or the dynamic time offset comprises the semi-static time offset.

30. An information determining apparatus, applied to a communication device and comprising:

a third determining module, configured to: when a time domain position of an associated resource corresponding to a first time offset belongs to P resource pools, determine, based on a weighted sum of time domain periods of a first resource, the number of bits of SL feedback information corresponding to the time domain position, wherein
P is a positive integer greater than 1, the first time offset is a time offset used for determining a time domain resource in which the SL feedback information is carried, the associated resource is a resource associated with a resource for transmitting the SL feedback information, and the first resource is a resource corresponding to a type of the associated resource in the P resource pools.

31. A communication device, comprising a processor, a memory, and a program or instructions stored in the memory and capable of running on the processor, wherein when the program or instructions are executed by the processor, the steps of the method according to any one of claims 1 to 19 are implemented.

32. A readable storage medium, wherein the readable storage medium stores a program or instructions, and when the program or instructions are executed by a processor, the steps of the method according to any one of claims 1 to 19 are implemented.

```
┌─────────────────────────────────────────────────────────────┐
│                                                          101  │
│               Obtain control signaling                        │
│                                                               │
└─────────────────────────────────────────────────────────────┘
                              │
┌─────────────────────────────────────────────────────────────┐
│                                                          102  │
│  Determine related information of SL feedback information      │
│           based on the control signaling                      │
│                                                               │
└─────────────────────────────────────────────────────────────┘
```

FIG. 1

```
┌─────────────────────────────────────────────────────────────┐
│                                                          201  │
│            Send control signaling to a terminal               │
│                                                               │
└─────────────────────────────────────────────────────────────┘
```

FIG. 2

```
┌─────────────────────────────────────────────────────────────┐
│                                                          301  │
│  Obtain a dynamic time offset and a semi-static time offset   │
│  that are used for determining a time domain resource in      │
│         which SL feedback information is located              │
└─────────────────────────────────────────────────────────────┘
                              │
┌─────────────────────────────────────────────────────────────┐
│                                                          302  │
│  Determine any one of the following: the semi-static time     │
│  offset includes the dynamic time offset, or the dynamic      │
│  time offset includes the semi-static time offset             │
└─────────────────────────────────────────────────────────────┘
```

FIG. 3

Send configuration information to a terminal

401

FIG. 4

When a time domain position of an associated resource corresponding to a first time offset belongs to P resource pools, determine, based on a weighted sum of time domain periods of resources corresponding to a type of the associated resource in the P resource pools, the number of bits of SL feedback information corresponding to the time domain position

501

FIG. 5

Information indication apparatus                    60

First obtaining module                              61

First determining module                            62

FIG. 6

Information indication apparatus ⟩70

First sending module ⟩71

FIG. 7

Information determining apparatus ⟩80

Second obtaining module ⟩81

Second determining module ⟩82

FIG. 8

Information determining apparatus ⟩90

Second sending module ⟩91

FIG. 9

```
┌─────────────────────────────────────────────┐  10
│   Information determining apparatus          │
│  ┌───────────────────────────────────────┐  │  11
│  │      Third determining module         │  │
│  └───────────────────────────────────────┘  │
└─────────────────────────────────────────────┘
```

FIG. 10

1100

```
┌─────────────────────────────────────────────────────────────────────┐
│                          Terminal                                     │
│                                         ┌──────────────┐  1102         │
│  1101      ┌──────────────┐             │   Network    │              │
│            │    Radio     │             │   module     │              │
│            │ frequency unit│            └──────────────┘  1103         │
│            └──────────────┘             ┌──────────────┐              │
│       1110                              │ Audio output │              │
│  ┌ ─ ─ ─ ─ ─ ─ ─ ┐                      │     unit     │  1104        │
│  1109  Memory                           └──────────────┘              │
│  │ ┌──────────┐ │   ┌──────────┐   ┌ ─ ─ ─ ─ ─ ─ ─ ─ ─ ┐            │
│    │Application│                   │    Input unit                    │
│  │ │ program  │ │   │          │   │ ┌──────────────┐ │              │
│    └──────────┘                     │   Graphics    │                │
│  │ ┌──────────┐ │   │ Processor│   │ │processing unit│ │             │
│    │Operating │                     └──────────────┘                 │
│  │ │ system   │ │   │          │   │ ┌──────────────┐ │              │
│    └──────────┘                     │  Microphone   │                │
│  └ ─ ─ ─ ─ ─ ─ ─ ┘   │          │   │ └──────────────┘ │             │
│  1108   ┌──────────┐                └ ─ ─ ─ ─ ─ ─ ─ ─ ─ ┘            │
│         │Interface │ │          │                                     │
│         │   unit   │                   ┌──────────────┐  1105         │
│         └──────────┘ └──────────┘      │    Sensor    │              │
│                                        └──────────────┘              │
│  ┌ ─ ─ ─ ─ ─ ─ ─ ─ ─ ┐      ┌ ─ ─ ─ ─ ─ ─ ─ ─ ┐                    │
│    User input unit          │   Display unit                         │
│  │ ┌──────────────┐ │       │ ┌──────────┐   │  1106                │
│  1107│ Touch panel │         │   Display   │                         │
│  │ └──────────────┘ │       │ │  panel   │   │                      │
│    ┌──────────────┐         └──────────┘                            │
│  │ │ Other input  │ │       └ ─ ─ ─ ─ ─ ─ ─ ─ ┘                    │
│    │   devices    │                                                  │
│  │ └──────────────┘ │                                                │
│  └ ─ ─ ─ ─ ─ ─ ─ ─ ─ ┘                                              │
└─────────────────────────────────────────────────────────────────────┘
```

FIG. 11

FIG. 12

<div align="center">**INTERNATIONAL SEARCH REPORT**</div>

| International application No. |
|---|
| **PCT/CN2021/093019** |

**A. CLASSIFICATION OF SUBJECT MATTER**

H04L 5/00(2006.01)i; H04W 72/12(2009.01)i

According to International Patent Classification (IPC) or to both national classification and IPC

**B. FIELDS SEARCHED**

Minimum documentation searched (classification system followed by classification symbols)

H04L H04W H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 旁链路, 副链路, 侧路, 侧链, 旁链, 旁路, 控制, 反馈, DCI, DAI, 分配索引, 计数, 时间, 偏置, 偏移, 资源池, 时域, 周期, HARQ, ACK, sai, sidelink, SL, control, feedback, count, resource pool, tim+, offset, RP, slot, period

**C. DOCUMENTS CONSIDERED TO BE RELEVANT**

| Category* | Citation of document, with indication, where appropriate, of the relevant passages | Relevant to claim No. |
|---|---|---|
| X | SPREADTRUM COMMUNICATIONS. "Consideration on NR sidelink mode 1 resource allocation" *3GPP TSG RAN WG1 #99 R1-1912576,* 22 November 2019 (2019-11-22), section 2.2 | 1-14, 20-27, 31, 32 |
| X | LG ELECTRONICS. "Discussion on NR sidelink resource allocation for Mode 1" *3GPP TSG RAN WG1 #100bis R1- 2001885,* 30 April 2020 (2020-04-30), section 2.3 | 1-14, 20-27, 31, 32 |
| A | SAMSUNG. "Corrections on Sidelink" *3GPP TSG-RAN WG1 Meeting #100bis-e R1-2003178,* 30 April 2020 (2020-04-30), section 16.5.1.1 | 15-17, 28, 29, 31, 32 |
| A | OPPO. "Remaining issues of mode 1 resource allocation for NR-V2X" *3GPP TSG RAN WG1 #100bis R1-2001746,* 30 April 2020 (2020-04-30), section 2 | 18, 19, 30-32 |
| A | US 2020029318 A1 (SAMSUNG ELECTRONICS CO., LTD.) 23 January 2020 (2020-01-23) entire document | 1-32 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2021** | **10 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/093019**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|-----------------------|
| A | WO 2019036578 A1 (INTEL CORPORATION) 21 February 2019 (2019-02-21)<br>entire document | 1-32 |

Form PCT/ISA/210 (second sheet) (January 2015)

**INTERNATIONAL SEARCH REPORT**
Information on patent family members

International application No.

**PCT/CN2021/093019**

| Patent document cited in search report | | | Publication date (day/month/year) | Patent family member(s) | | | Publication date (day/month/year) |
|---|---|---|---|---|---|---|---|
| US | 2020029318 | A1 | 23 January 2020 | KR | 20210024000 | A | 04 March 2021 |
| | | | | WO | 2020022752 | A1 | 30 January 2020 |
| | | | | EP | 3808023 | A1 | 21 April 2021 |
| WO | 2019036578 | A1 | 21 February 2019 | CN | 111213393 | A | 29 May 2020 |
| | | | | EP | 3669557 | A1 | 24 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010414536